(19) **Europäisches Patentamt**
**European Patent Office**
**Office européen des brevets**

(11) **EP 1 860 134 B1**

(12) **EUROPEAN PATENT SPECIFICATION**

(45) Date of publication and mention
of the grant of the patent:
**27.05.2015 Bulletin 2015/22**

(21) Application number: **06729410.8**

(22) Date of filing: **17.03.2006**

(51) Int Cl.:
*C08G 69/26* (2006.01)        *B32B 27/34* (2006.01)
*C08L 23/26* (2006.01)        *C08L 77/06* (2006.01)
*C08L 77/02* (2006.01)

(86) International application number:
**PCT/JP2006/305421**

(87) International publication number:
**WO 2006/098434 (21.09.2006 Gazette 2006/38)**

(54) **SEMI-AROMATIC POLYAMIDE RESIN**

HALBAROMATISCHES POLYAMIDHARZ

RESINE POLYAMIDE SEMI-AROMATIQUE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **18.03.2005   JP 2005078542
18.03.2005   JP 2005078692**

(43) Date of publication of application:
**28.11.2007   Bulletin 2007/48**

(73) Proprietor: **KURARAY CO., LTD.
Kurashiki-shi, Okayama 710-8622 (JP)**

(72) Inventors:
• **UCHIDA, Koichi**
**Kanagawa 223-0052 (JP)**
• **KIKUCHI, Hirofumi**
**Okayama, 713-8550 (JP)**

• **KASHIMURA, Tsugunori**
**Tokyo, 1008115 (JP)**
• **YAMASHITA, Takashi**
**Ibaraki, 3050841 (JP)**
• **YAMASAKI, Hiroki**
**Ibaraki, 3050841 (JP)**

(74) Representative: **Müller-Boré & Partner
Patentanwälte PartG mbB
Friedenheimer Brücke 21
80639 München (DE)**

(56) References cited:
**EP-A- 0 659 799          JP-A- 9 012 874
JP-A- 09 012 713          JP-A- 2002 114 906
JP-A- 2004 150 500        US-A- 5 962 628
US-A1- 2004 135 371**

## Description

The present invention relates to a semi-aromatic polyamide resin in which the polymer terminals are highly controlled. In particular, the present invention relates to a semi-aromatic polyamide resin which not only exhibits excellent adhesive properties and compatibility with various resin materials which are used when polymer alloys are formed, but also exhibits excellent mechanical strength, low water absorbency, dimensional stability and residence stability and which can be used preferably as a molding material for, for example, industrial resources, industrial materials, household products. The present invention also relates to a polyamide resin composition comprising the above detailed semi-aromatic polyamide resin. Furthermore, the present invention relates to a chemical transport hose (tube) including at least one layer composed of a polyamide resin composition comprising the above-mentioned semi-aromatic polyamide resin and a modified polyolefin-based resin. In addition to this, the present invention relates to a pipe joint in which the amount of fuel permeation through the wall is small and which has excellent stiffness and fuel barrier properties even at high temperatures, and in particular to a fuel pipe quick connector used in applications such as automobiles.

General purpose polyamides typified by nylon 6 and nylon 66 have excellent properties such as heat resistance, chemical resistance, stiffness, slidability and moldability and also exhibit very high toughness in a water-absorbed state. Therefore, such general purpose polyamides have conventionally been used in wide-ranging applications such as automobile parts, electrical/electronic parts and sliding parts.

In the automobile parts field among the applications of the conventional general purpose polyamides, the need for increasing the heat resistance of resin components, such as chemical transport hoses, used inside or outside an engine room has been increasing with the increase in the temperature in the engine room due to the drive for improved efficiency of automobile engines. In particular, in Europe, there is a tendency toward the use of diesel fuel in order to, for example, reduce fuel cost to thereby improve economic efficiency. However, the temperature in a diesel fuel engine room has also been increased. Hence, the need to improve the heat resistance of resin components used in automobiles has been increasing.

Moreover, the resin components for automobiles must have resistance to chemicals such as gasoline, diesel fuel, engine oil, an aqueous solution of calcium chloride and an aqueous solution of LLC (coolant), and further improvements are required in mechanical properties such as stiffness, strength, toughness and creep resistance.

Furthermore, in the field of electrical/electronic parts, as surface mount technology (SMT) becomes widespread, resin used in connectors or the like is required to have reflow soldering heat resistance. In particular, the reflow soldering temperature has tended to further increase due to the rapid development of lead-free solder in recent years. Therefore, resin components for electrical/electronic use have been required to have higher reflow soldering heat resistance accomodated to higher temperatures than before. Moreover, in terms of suppressing blistering during reflow soldering, such resin components have been strongly required not only to have good heat resistance but also to exhibit a lower level of water absorbency.

Further to this, in the field of sliding parts, the environment where sliding parts are being used is being extended to an environment of high contact pressure and high temperature atmosphere, and thus sliding parts have been required to have higher wear resistance, heat resistance, durability and dimensional stability. In particular, such sliding parts are also required to have a lower level of water absorbency, in order to prevent the occurrence of issues caused by engagement failure of gears due to dimensional changes brought about by the absorption of water.

However, conventional general purpose polyamides have a problem in that the above-mentioned high-level characteristics required for resin components in the fields of recent automobile-parts, electrical/electronic parts and sliding parts are not fully satisfied.

Hence, in order to fulfill the characteristics required for the resin components in these fields, there have been proposed polyamides having excellent heat resistance, low water absorbency, creep resistance and the like. Examples of such polyamides include polyamides in which the dicarboxylic acid units are terephthalic acid and the diamine units are 1,9-nonanediamine and/or 2-methyl-1,8-octanediamine (see Patent Documents 1 and 2). In addition to this, in order to further improve the physical properties of the above detailed polyamides, there have been proposed polyamide resin compositions each compounded a different polymer (see Patent Documents 3 to 6). Furthermore, as a polyamide resin composition having excellent impact resistance, low water absorbency and creep properties at high temperature and high pressure, there has been proposed a polyamide resin composition which is prepared by adding a specific amount of a graft-modified polymer to a specific semi-aromatic polyamide having a terminal amino group concentration in the range of 10 to 150 mmol/kg (see Patent Document 7). Moreover, a thermoplastic polyamide resin composition has been proposed which is composed of a nylon resin matrix and a polyolefin resin dispersed therein (see Patent Document 8). In this resin composition, in order to finely disperse a disperse phase and to obtain a specific dispersed phase morphology so as to provide well-balanced stiffness and impact resistance, the value obtained by subtracting [the terminal carboxyl group concentration] of the nylon resin from [the terminal amino group concentration] of the nylon resin is adjusted to $0.5 \times 10^{-5}$ eq/g or more.

By the way, rubber tubes have been used in the field of fuel pipe materials for automobiles. However, rubber tubes have the following problems. The tubes are heavy since the wall thickness thereof must be large in order to achieve a predetermined strength. The barrier characteristics of the rubber tube to gasoline or the like serving as the fuel are not sufficient. When the rubber tube is connected to a metal tube used in combination therewith, the handleability is poor.

Therefore, in recent years, a resin tube has been used in place of a rubber tube. Such a resin tube is composed of a resin, such as nylon 11 resin or nylon 12 resin, which is relatively lightweight and has excellent mechanical properties and chemical resistance and also has excellent fuel barrier characteristics to gasoline and the like. However, the hydrocarbon permeation-preventing properties of such a resin tube are still insufficient. Therefore, a multilayer tube has been developed which is formed by lining the inner wall of such a resin tube with a favorable fuel barrier layer composed of a fluorine resin or the like (see Patent Document 9).

Aside from the development of such a multilayer tube, a fuel pipe joint referred to as a quick connector has been developed which can quickly and easily connect a resin tube to a metal tube (see Patent Document 10). This pipe joint comprises: a male-type joint main body which is made of a hard resin and into which a metal tube is inserted; and a female-type hose protector which is made of an elastomer and into which a resin tube is inserted. Further to this, a tubular nipple portion to be pressed into the resin tube inserted into the hose protector is provided in the joint main body.

As a global trend, all fuel pipe parts including a fuel tube and a joint portion are required to have high fuel permeation-preventing properties in order to greatly reduce the amount of automobile-loaded hydrocarbon-based fuel which is evapotranspired without first being used for combustion. The demand of the fuel permeation-preventing properties of a fuel tube constituting a fuel pipe part can be met by using a resin tube, such as the above-mentioned multilayer tube, having high fuel barrier properties. For the fuel permeation-preventing properties of a fuel joint, such as a quick connector serving as a connection portion, a technique has been proposed in which the sealing between the pipe joint and a resin tube is improved, for example, by providing an O-ring or by spin-welding the pipe joint to the resin tube (see Patent Documents 11 and 12). However, though nylon 12 resin and nylon 66 resin are widely used as the resin constituting a pipe joint such as a quick connector, the fuel permeation-preventing properties of such resins are not sufficient. Therefore, when higher levels of fuel permeation-preventing properties are required, the wall thickness of a pipe joint must be increased, or the number of pipe joints to be disposed in a fuel pipe system must be decreased. Hence, it is conceivable that the design flexibility of a fuel pipe system may be decreased.

In view of the above, the development of a resin material itself, constituting a pipe joint such as a quick connector, has been attempted, and a pipe joint has been proposed in which a polyamide having excellent fuel permeation resistance is used as a main component (see Patent Document 13). This polyamide is a polyamide (nylon 9T) comprising: a dicarboxylic acid component in which 60 to 100 mol% of dicarboxylic acid units are terephthalic acid units; and a diamine component in which 60 to 100 mol% of diamine units are selected from 1,9-nonanediamine units and 2-methyl-1,8-octanediamine units.

[Patent Document 1] Japanese Patent Application Laid-Open No. Hei 7-228769.
[Patent Document 2] Japanese Patent Application Laid-Open No. Hei 7-228772.
[Patent Document 3] Japanese Patent Application Laid-Open No. Hei 7-228774.
[Patent Document 4] Japanese Patent Application Laid-Open No. Hei 7-228771.
[Patent Document 5] Japanese Patent Application Laid-Open No. Hei 9-12874.
[Patent Document 6] Japanese Patent Application Laid-Open No. 2000-186203.
[Patent Document 7] Japanese Patent Application Laid-Open No. 2002-179910.
[Patent Document 8] Japanese Patent Application Laid-Open No. Hei 11-140237.
[Patent Document 9] Japanese translation of PCT international application No. Hei 7-507739.
[Patent Document 10] Japanese Patent Application Laid-Open No. Hei 11-294676.
[Patent Document 11] Japanese Patent Application Laid-Open No. 2000-310381.
[Patent Document 12] Japanese Patent Application Laid-Open No. 2001-263570.
[Patent Document 13] Japanese Patent Application Laid-Open No. 2004-150500.

However, when the above-described improved polyamide resin composition is subjected to heat treatment such as melt molding, a problem arises in that the physical properties, such as intrinsic viscosity, are changed before and after the treatment. Such changes in the physical properties cause changes in the mechanical properties of obtained molded articles and, as such, cause an unevenness in the quality thereof. Therefore, there has been a strong demand for a resin that has excellent chemical properties such as hot-water resistance and chemical resistance and also has excellent mechanical properties such as impact strength while the stability (residence stability) during heat treatment is maintained at a high level. In addition to this, there has been a strong demand for a composition comprising such a resin.

Similarly, when the above-mentioned improved polyamide resin composition is used as a chemical transport hose for automobiles, it is not enough that the resin composition have only chemical resistance to transporting chemicals and high elongation properties suitable for extrusion molding. Further to this, the heat resistance, impact resistance, low water absorbency, dimensional stability, creep resistance must also be simultaneously improved. However, a problem exists in that these properties cannot be satisfied at the same time.

Among pipe joints, the pipe joint disclosed in Patent Document 13 exhibits relatively good fuel permeation resistance at room temperature, but there is room for further improvement in impact resistance. Furthermore, a spark caused by static electricity may cause a problem in a passage in which fuel acts as fluid. Therefore, the resin must be subjected to a treatment for imparting conductivity by, for example, adding a conductive filler. However, when a conductive filler is added to the polyamide resin composition disclosed in Patent Document 13, a problem arises in that the physical properties, such as impact resistance, decrease.

The present invention satisfies these demands, and it is a first object of the present invention to provide a novel semi-aromatic polyamide resin capable of providing a polyamide resin composition which has excellent heat resistance, low water absorbency, dimensional stability, creep resistance and which has high residence stability and excellent mechanical strength. Furthermore, the first object of the present invention is to provide a polyamide resin composition comprising the above detailed semi-aromatic polyamide resin. In particular, the first object of the present invention is to provide a semi-aromatic polyamide resin which has a high level of residence stability, hot-water resistance and chemical resistance and which also has excellent adhesive properties to, and compatibility with, other resins Furthermore, the first object of the present invention is to provide a polyamide resin composition which comprises the above detailed semi-aromatic polyamide resin and which has high impact resistance while having a high level of residence stability and hot-water resistance and has even better chemical resistance in comparison to conventional polyamide resin compositions.

Furthermore, it is a second object of the present invention to provide a chemical transport hose including at least one layer composed of a polyamide resin composition which has excellent heat resistance, impact resistance, low water absorbency, dimensional stability, creep resistance and which has high chemical resistance and high elongation. In particular, the second object of the present invention is to provide a chemical transport hose which has a high level of tensile elongation and low-temperature impact resistance and which is capable of maintaining the high tensile elongation and low-temperature impact resistance even when the chemical transport hose is exposed to transporting chemicals such as an aqueous solution of LLC.

Moreover, it is a third object of the present invention to provide a pipe joint which is capable of providing a significant reduction in the amount of fuel permeation through the wall, which has excellent stiffness and fuel barrier properties, even at high temperatures, and has highly improved impact resistance, and in which the reduction of physical properties is suppressed even when a conductive filler is added. In particular, the third object of the present invention is to provide a fuel pipe quick connector to be employed in automobiles and a fuel pipe part which employs the fuel pipe quick connector.

The present inventors have found that the above detailed first object can be achieved by blocking a predetermined ratio or higher of the terminal groups of the molecular chains of a semi-aromatic polyamide resin comprising specific aromatic dicarboxylic acid units and aliphatic diamine units, setting the amount of remaining terminal amino groups within a specific range and further setting the value obtained by dividing the amount of the terminal amino groups by the amount of terminal carboxyl groups to a predetermined value or higher.

Furthermore, the present inventors have found that the above detailed second object can be achieved by forming a chemical transport hose using a polyamide resin composition which comprises the above detailed semi-aromatic polyamide resin and a polyolefin-based resin modified with an $\alpha,\beta$-unsaturated carboxylic acid and/or a derivative thereof in a predetermined ratio.

Moreover, the present inventors have found that, when a pipe joint is formed from a polyamide resin composition comprising specific amounts of the above detailed semi-aromatic polyamide resin, resin-reinforcing fiber and a specific modified polyolefin-based resin, the impact resistance of the pipe joint can be significantly improved while high fuel permeation-preventing properties are maintained. Hence, the above third object of the present invention can also be achieved.

The present inventors have developed the present invention based on the above findings.

Accordingly, in order to achieve the above detailed first object, the present invention provides a semi-aromatic polyamide resin comprising: dicarboxylic acid units in which 50 to 100 mol% of the dicarboxylic acid units are aromatic dicarboxylic acid units; and diamine units in which 60 to 100 mol% of the diamine units are aliphatic diamine units having 9 to 13 carbon atoms, wherein at least 10% of terminal groups of molecular chains of the semi-aromatic polyamide resin are blocked with a terminal-blocking agent, wherein an amount of terminal amino groups of the molecular chains is 60 $\mu$eq/g or more and 120 $\mu$eq/g or less, and wherein the following inequality (1) is satisfied:

$$[NH_2] \ / \ [COOH] \ \geq \ 6 \qquad (1)$$

where $[NH_2]$ ($\mu$eq/g) represents the amount of the terminal amino groups determined by titration of a sample solution of 1 g of a semi-aromatic polyamide resin dissolved in 35 ml of phenol, to which 2 ml of methanol was added, using 0.01 N aqueous hydrochloric acid with thymol blue as an indicator, and [COOH] ($\mu$eq/g) represents an amount of terminal carboxyl groups determined by potentiometric titration of 1 g of a semi-aromatic polyamide resin dissolved in 35 ml of o-cresol under heating, to which solution 20 ml of benzyl alcohol and 250 $\mu$l of formaldehyde were added after cooling, using a 0.1 N methanolic solution of KOH,

wherein the ratio of terminal groups of molecular chains of the semi-aromatic polyamide resin that are blocked with a terminal-blocking agent is determined according to the following formula (2):

$$[(A - B) / A] \times 100\% \qquad (2),$$

wherein A represents the total number of terminal groups of the molecular chains, and B represents the total number of the terminal carboxyl groups and the terminal amino groups,

wherein the number of each of the terminal carboxyl groups, the terminal amino groups and the blocked terminal groups for determining the terminal blocking ratio according to the above formula (2) are determined by $^1$H-NMR analysis at 500 MHz in deuterated trifluoroacetic acid at 50°C on the basis of the integrated values of the characteristic signals corresponding to the respective terminal groups.

Furthermore, in connection with the achievement of the first object, the present invention provides a polyamide resin composition comprising the above detailed semi-aromatic polyamide resin of the present invention and an additional resin other than this semi-aromatic polyamide resin and provides a molded article comprising: this polyamide resin composition.

Moreover, in order to achieve the above detailed second object, the present invention provides a chemical transport hose comprising at least one layer composed of a polyamide resin composition comprising 10 to 99 parts by mass of the above detailed semi-aromatic polyamide resin of the present invention and 90 to 1 part by mass of a polyolefin-based resin modified with an $\alpha,\beta$-unsaturated carboxylic acid and/or a derivative thereof.

Further to this, in order to achieve the above detailed third object, the present invention provides a pipe joint comprising a polyamide resin composition comprising 100 parts by mass of the above detailed semi-aromatic polyamide resin of the present invention, 10 to 200 parts by mass of resin reinforcing fiber and 5 to 50 parts by mass of a polyolefin-based resin modified with an $\alpha,\beta$-unsaturated carboxylic acid and/or a derivative thereof. One preferred specific embodiment of the pipe joint of the present invention is a fuel pipe quick connector. Furthermore, examples of the preferred applications of the pipe joint include a fuel pipe part in which the pipe joint is joined to a resin hose by means of at least one welding method selected from the group consisting of: a spin-welding method, a vibration welding method, a laser welding method and an ultrasonic welding method.

The semi-aromatic polyamide resin of the present invention comprises specific aromatic dicarboxylic acid units and aliphatic diamine units. In this polyamide resin, a predetermined ratio or higher of the terminal groups of the molecular chains thereof are blocked, and the amount of remaining terminal amino groups is set within a specific range. In addition to this, the value obtained by dividing the amount of the terminal amino groups by the amount of terminal carboxyl groups is equal to or larger than a predetermined value. Therefore, the semi-aromatic polyamide resin exhibits high residence stability, hot-water resistance and chemical resistance and also exhibits very good adhesive properties to, and compatibility with, other resin materials which form polymer alloys. Therefore, a polyamide resin composition comprising this semi-aromatic polyamide resin exhibits high residence stability and hot-water resistance and can be used to provide a molded article which is excellent in heat resistance, low water absorbency, dimensional stability and mechanical strength such as creep resistance while exhibiting high impact resistance. Furthermore, this molded article is more excellent in chemical resistance. Hence, the polyamide resin composition comprising the semi-aromatic polyamide resin of the present invention is suitable as a molding material for, for example, industrial resources, industrial materials, household products.

Moreover, the chemical transport hose of the present invention exhibits excellent chemical resistance and good elongation and also has excellent heat resistance, impact resistance, low water absorbency, dimensional stability, creep resistance.

Furthermore, the pipe joint of the present invention has highly improved impact resistance while maintaining high fuel permeation-preventing properties and exhibits excellent stiffness and fuel barrier properties even at high temperatures. In addition to this, even when a conductive filler is added, the pipe joint exhibits a satisfactory level of impact resistance. Therefore, a pipe system having high sealing properties can be constituted by welding and joining the pipe joint to a resin hose. In particular, the pipe joint can be preferably used as a fuel pipe quick connector used as an automobile part.

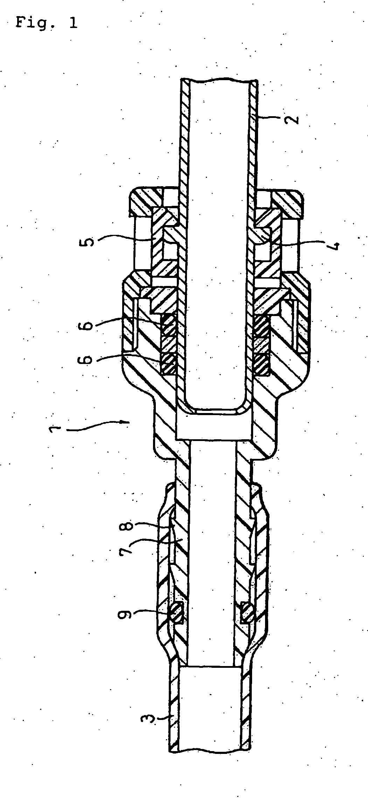

Fig. 1 is a cross-sectional view of a representative fuel pipe quick connector.

1 fuel pipe quick connector
2 steel tube
3 resin hose
4 flange-shaped portion
5 retainer
6 O-ring
7 nipple
8 barb portion
9 O-ring

A semi-aromatic polyamide resin of the present invention comprises dicarboxylic acid units and diamine units, and 50 to 100 mol%, preferably 60 to 100 mol%, more preferably 70 to 100 mol%, still more preferably 80 to 100 mol% of the dicarboxylic acid units are aromatic dicarboxylic acid units. This is because, when the content of the aromatic dicarboxylic acid units in the dicarboxylic acid units is less than 50 mol%, the heat resistance and chemical resistance of the obtained semi-aromatic polyamide resin and molded articles, such as chemical transport hoses and pipe joints, formed from the polyamide resin as a raw material are impaired. Furthermore, 60 to 100 mol%, preferably 70 to 100 mol%, and more preferably 80 to 100 mol% of the diamine units are aliphatic diamine units having 9 to 13 carbon atoms. This is because, when the content of the aliphatic diamine units in the diamine units is less than 60 mol%, the reduction of the crystallinity of the obtained semi-aromatic polyamide resin becomes large. Therefore, the physical properties, such as heat resistance, low water absorbency, dimensional stability and creep resistance, of the semi-aromatic polyamide resin and of molded articles, such as chemical transport hoses and pipe joints, formed from the polyamide resin as a raw material are impaired. The reason that the number of carbon atoms in the aliphatic diamine units is 9 to 13 is as follows. When the number of carbon atoms is 8 or less, the water absorbency of the obtained semi-aromatic polyamide resin and of molded articles, such as chemical transport hoses and pipe joints, formed from the polyamide resin as a raw material is increased. When the number of carbon atoms is 14 or more, the heat resistance of the obtained semi-aromatic polyamide resin and of molded articles, such as chemical transport hoses and pipe joints, formed from the polyamide resin as a raw material is impaired.

Specific examples of the above aromatic dicarboxylic acid units include structural units derived from terephthalic acid, isophthalic acid, 2,6-naphthalenedicarboxylic acid, 2,7-naphthalenedicarboxylic acid, 1,4-naphthalenedicarboxylic acid, 1,4-phenylenedioxydiacetic acid, 1,3-phenylenedioxydiacetic acid, diphenic acid, 4,4'-oxydibenzoic acid, diphenylmethane-4,4'-dicarboxylic acid, diphenylsulfone-4,4'-dicarboxylic acid and 4,4'-biphenyldicarboxylic acid

The aromatic dicarboxylic acid units may include one or more of these structural units. Of these, in terms of economic efficiency and the properties of the obtained semi-aromatic polyamide resin and of molded articles, such as chemical transport hoses and pipe joints, formed from the polyamide resin as a raw material, preferable are the structural units derived from terephthalic acid, isophthalic acid and 2,6-naphthalenedicarboxylic acid, and more preferable are the structural units derived from terephthalic acid and/or 2,6-naphthalenedicarboxylic acid. Most preferable are the structural units derived from terephthalic acid.

The semi-aromatic polyamide resin of the present invention may comprise additional dicarboxylic acid units other than the above aromatic dicarboxylic acid units in accordance with need. Examples of the additional dicarboxylic acid units include structural units derived from one or more of: aliphatic dicarboxylic acids such as malonic acid, dimethylmalonic acid, succinic acid, glutaric acid, adipic acid, 2-methyladipic acid, trimethyladipic acid, pimelic acid, 2,2-dimethylglutaric acid, 2,2-diethylsuccinic acid, azelaic acid, sebacic acid, suberic acid, undecanedioic acid and dodecanedioic acid; and alicyclic dicarboxylic acids such as 1,3-cyclopentanedicarboxylic acid and 1,4-cyclohexanedicarboxylic acid. The content of the additional dicarboxylic acid units must be 50 mol% or less with respect to the total amount of the dicarboxylic acid units. The content of the additional dicarboxylic acid units is preferably 40 mol% or less, more preferably 30 mol% or less, and still more preferably 20 mol% or less. Furthermore, the semi-aromatic polyamide resin may comprise structural units derived from polyfunctional compounds such as trimellitic acid, trimesic acid and pyromellitic acid so long as the semi-aromatic polyamide resin is melt-moldable.

Specific examples of the aliphatic diamine units having 9 to 13 carbon atoms include structural units derived from 1,9-nonanediamine, 2-methyl-1,8-octanediamine, 1,10-decanediamine, 1,11-undecanediamine, 1,12-dodecanediamine, 5-methyl-1,9-nonanediamine, 2,2,4-trimethyl-1,6-hexanediamine, 2,4,4-trimethyl-1,6-hexanediamine.

The aliphatic diamine units may include one or more of these structural units. Of these, the structural units derived from 1,9-nonanediamine and/or 2-methyl-1,8-octanediamine are particularly preferable.

When both 1,9-nonanediamine units and 2-methyl-1,8-octanediamine units are comprised as the aliphatic diamine units having 9 to 13 carbon atoms, no particular limitation is imposed on the molar ratio between them. However, when the amount of the 1,9-nonanediamine units is too low, the moldability may deteriorate. In addition to this, when the obtained semi-aromatic polyamide resin is used as a material for forming a pipe joint the fuel barrier properties may deteriorate. When the amount of the 1,9-nonanediamine units is too large, the crystallization rate increases, and thus the moldability during molding of a chemical transport hose, a pipe joint or the like tends to deteriorate. Therefore, the ratio of the amount of the 1,9-nonanediamine units (the number of moles) to the amount of 2-methyl-1,8-octanediamine units (the number of moles) is preferably from 40/60 to 99/1, more preferably from 45/55 to 95/5, and still more preferably from 50/50 to 85/15.

The semi-aromatic polyamide resin of the present invention may comprise additional diamine units other than the aliphatic diamine units having 9 to 13 carbon atoms in accordance with need. Examples of the additional diamine units include structural units derived from one or more of: straight chain aliphatic diamines such as 1,4-tetramethylenediamine, 1,6-hexanediamine, 1,7-heptanediamine.and 1,8-octanediamine; branched aliphatic diamines such as 2-methyl-1,5-pentanediamine, 3-methyl-1,5 pentanediamine and 2,4-dimethylhexanediamine; alicyclic diamines such as cyclohexyldiamine, methylcyclohexyldiamine, bis(p-cyclohexyl)methanediamine, bis(aminomethyl)norbornane, bis(aminomethyl)tricylodecane and bis(aminomethyl)cyclohexane; and aromatic diamines such as p-phenylenediamine, m-phenylenediamine, xylylenediamine, 4,4'-diaminodiphenylsulfone and 4,4'-diaminodiphenylether. The content of these additional diamine units must be 40 mol% or less with respect to the total amount of the diamine units. The content is preferably 30 mol% or less, and more preferably 20 mol% or less.

Furthermore, the semi-aromatic polyamide resin of the present invention may include additional structural units other than the dicarboxylic acid units and the diamine units within the range which does not impair the effects of the present invention. Examples of such additional structural units include aminocarboxylic acid units derived from: lactams such as laurolactam; aminocarboxylic acids such as 9-aminocaproic acid, 11-aminoundecanoic acid and 12-aminododecanoic acid; and the like. In the semi-aromatic polyamide resin of the present invention, the content of the additional structural units other than the dicarboxylic acid units and the diamine units is preferably 30% by mass or less, more preferably 10% by mass or less, and still more preferably 5% by mass or less.

In the semi-aromatic polyamide resin of the present invention, at least 10%, preferably at least 20%, more preferably at least 40%, and still more preferably at least 70% of the terminal groups of the molecular chains of the polyamide resin are blocked with a terminal-blocking agent. By blocking the terminal groups, a semi-aromatic polyamide resin more excellent in properties such as residence stability and hot-water resistance can be obtained, and the properties such as melt stability and hot-water resistance are further improved in molded articles, such as chemical transport hoses and pipe joints, formed from such a semi-aromatic polyamide resin as a raw material. Here, the terminal groups of the molecular chains are the amino groups or carboxyl groups at the terminals of the semi-aromatic polyamide resin. The terminal-blocking agent is a monofunctional compound having reactivity with the terminal amino groups or the terminal carboxyl groups. Specific examples of the terminal-blocking agent for the terminal amino groups include monocarboxylic acid compounds. Specific examples of the terminal-blocking agent for the terminal carboxyl groups include monoamine compounds.

In a method for incorporating a terminal-blocking agent into the semi-aromatic polyamide resin of the present invention, the terminal-blocking agent is brought to react with dicarboxylic acid units and the diamine units when the semi-aromatic polyamide resin is manufactured from the dicarboxylic acid units and the diamine units. Furthermore, the amount of the terminal-blocking agent used during the manufacturing depends on the desired polymerization degree of the semi-aromatic polyamide resin used, the reactivity and the boiling point of the terminal-blocking agent, a reaction apparatus, reaction conditions . Normally, the amount of the terminal-blocking agent falls within the range of preferably 0.1 to 15 mol%, and more preferably 0.3 to 15 mol% with respect to the total molar number of the dicarboxylic acid component and the diamine component which serve as raw materials for the semi-aromatic polyamide resin.

The terminal blocking ratio of the semi-aromatic polyamide resin of the present invention is determined by measuring the numbers of the terminal carboxyl groups and terminal amino groups, respectively, present in the semi-aromatic polyamide resin and the number of terminals blocked by the terminal-blocking agent. Specifically, the terminal blocking ratio is determined from the following equation (2). In the equation (2), "A" represents the total number of terminal groups of the molecular chains (normally, this is equal to twice the number of semi-aromatic polyamide resin molecules), and "B" represents the total number of the terminal carboxyl groups and the terminal amino groups.

$$\text{Terminal blocking ratio (\%)} = [(A - B) / A] \times 100 \quad (2)$$

In terms of accuracy and simplicity, the numbers of the respective terminal groups are determined by $^1$H-NMR on the basis of the integrated values of the characteristic signals corresponding to the respective terminal groups. When the characteristic signal of the terminals blocked by the terminal-blocking agent cannot be identified, the intrinsic viscosity [η] of the semi-aromatic polyamide resin is measured, and the total number of the terminal groups of the molecular chains is computed by using the relation of the following equations (3) and (4). In the equations (3) and (4), "Mn" represents the number average molecular weight of the semi-aromatic polyamide resin.

$$Mn = 21900 \, [\eta] - 7900 \qquad (3)$$

Total number of terminal groups of molecular chains

$$(eq/g) = 2 / Mn \qquad (4)$$

Further to this, the number (eq/g) of the terminal carboxyl groups in the semi-aromatic polyamide resin is determined by titration [a benzyl alcohol solution of the semi-aromatic polyamide resin is titrated with 0.1N potassium hydroxide], and the number (eq/g) of the terminal amino groups is determined by titration [a phenol solution of the semi-aromatic polyamide resin is titrated with 0.01N hydrochloric acid]. Then, the terminal blocking ratio can be determined from the equation (2) above.

No particular limitation is imposed on the monocarboxylic acid compound usable as the terminal blocking agent so long as it has reactivity with the terminal amino groups. Examples of the monocarboxylic acid compound include: aliphatic monocarboxylic acids such as acetic acid, propionic acid, butyric acid, valeric acid, caproic acid, caprylic acid, lauric acid, tridecanoic acid, myristic acid, palmitic acid, stearic acid, pivalic acid and isobutyric acid; alicyclic monocarboxylic acids such as cyclohexanecarboxylic acid; aromatic monocarboxylic acids such as benzoic acid, toluic acid, $\alpha$-naphthalenecarboxylic acid, $\beta$-naphthalenecarboxylic acid, methylnaphthalenecarboxylic acid and phenylacetic acid; and mixtures of any of these acids. Of these, acetic acid, propionic acid, butyric acid, valeric acid, caproic acid, caprylic acid, lauric acid, tridecanoic acid, myristic acid, palmitic acid, stearic acid and benzoic acid are preferable in terms of reactivity, the stability of the blocked terminals, cost and the like.

No particular limitation is imposed on the monoamine compound usable as the terminal blocking agent so long as it has reactivity with the terminal carboxyl groups. Examples of the monoamine compound include: aliphatic monoamines such as methylamine, ethylamine, propylamine, butylamine, hexylamine, octylamine, decylamine, stearylamine, dimethylamine, diethylamine, dipropylamine and dibutylamine; alicyclic monoamines such as cyclohexylamine and dicyclohexylamine; aromatic monoamines such as aniline, toluidine, diphenylamine and naphthylamine; and mixtures of any of these. Of these, butylamine, hexylamine, octylamine, decylamine, stearylamine, cyclohexylamine and aniline are preferable in terms of reactivity, boiling point, the stability of blocked terminals, cost and the like.

In the semi-aromatic polyamide resin of the present invention, the amount of the terminal amino groups is 60 $\mu$eq/g or more and 120 $\mu$eq/g or less, preferably,70 $\mu$eq/g or more and 110 $\mu$eq/g or less, and more preferably 80 $\mu$eq/g or more and 100 $\mu$eq/g or less. This is because, when the amount of the terminal amino groups is less than 60 $\mu$eq/g, the adhesive properties to other materials are not sufficient during multicolor molding such as molding of a chemical transport hose such as a multilayered hose. Furthermore, the compatibility in a polymer alloy is not sufficient, and therefore, when a pipe joint is formed by using such a polymer alloy, the mechanical properties may not reach a desired level. Further to this, when the amount of the terminal amino groups exceeds 120 $\mu$eq/g, a desired polymerization degree cannot be achieved and the residence stability is not sufficient.

In the semi-aromatic polyamide resin of the present invention, the ratio ($[NH_2]/[COOH]$) of the amount of the terminal amino groups $[NH_2]$ ($\mu$eq/g) to the amount of the terminal carboxyl groups $[COOH]$ ($\mu$eq/g) must be 6 or more, and the ratio is preferably 7 or more and 100 or less, more preferably 8 or more and 50 or less, and still more preferably 10 or more and 50 or less. This is because, when the ratio $[NH_2]/[COOH]$ is less than 6, not only the residence stability is not sufficient, but also an increase in the polymerization degree occurs during a melting stage of molding, compounding to cause difficulty in obtaining a semi-aromatic polyamide resin having a desired polymerization degree. In addition to this, this is because the amount of the terminal carboxyl groups increases relative to the amount of the terminal amino groups and the increase is likely to cause deterioration due to heat or light.

In the semi-aromatic polyamide resin of the present invention, the amount of the terminal amino groups and the ratio of the amount of the terminal amino groups to the amount of the terminal carboxyl groups ($[NH_2]/[COOH]$) can be adjusted by adjusting the fed amounts of the diamine component and the dicarboxylic acid component during polymerization and by adjusting the degree of progress of polymerization. In general, when the fed amounts of the diamine component, the dicarboxylic acid component during polymerization are adjusted to satisfy the following equation (5), the amount of the terminal amino groups can be adjusted to 60 $\mu$eq/g or more and 120 $\mu$eq/g or less. In addition to this, the ratio of the amount of the terminal amino groups to the amount of the terminal carboxyl groups can be adjusted to 6 or more. Furthermore, when the progress of polymerization is insufficient, not only the ratio of the amount of the terminal amino groups to the amount of the terminal carboxyl groups tends to be less than 6, but also the intended polymerization degree tends not to be achieved.

The semi-aromatic polyamide resin of the present invention can be manufactured, for example, as follows. First, a catalyst, the terminal blocking agent, the diamine component and the dicarboxylic acid component are mixed together to form a nylon salt. At this time, it is preferable to adjust the total molar number (X) of the carboxyl groups and the total molar number (Y) of the amino groups contained in reaction raw materials so as to satisfy the following inequality (5). In this manner, a semi-aromatic polyamide resin having a large amount of the terminal amino groups and a small amount of terminal carboxyl groups, i.e., having a ratio $[NH_2]/[COOH]$ of 6 or more, can be easily manufactured.

$$1.0 \leq [(Y - X) / Y] \times 100 \leq 6.0 \qquad (5)$$

Next, the generated nylon salt is heated to 200 to 250°C to form a prepolymer having an intrinsic viscosity $[\eta]$ of 0.10 to 0.60 dl/g at 30°C in concentrated sulfuric acid. Furthermore, the prepolymer is polymerized to a higher degree, whereby the semi-aromatic polyamide resin of the present invention can be obtained.

The reason for adjusting the intrinsic viscosity $[\eta]$ of the prepolymer within the range of 0.10 to 0.60 dl/g is as follows. In this range, the degree of disruption of the molar balance between the carboxyl groups and the amino groups and a reduction in the polymerization rate are small in the stage of increasing the degree of polymerization. In addition to this, a semi-aromatic polyamide resin can be obtained which has a narrower molecular weight distribution and which is excellent in various properties and moldability. Meanwhile, when a solid phase polymerization method is employed in the stage of increasing the degree of polymerization, it is preferable to perform the polymerization under reduced pressure or under a stream of an inert gas. Further to this, when the polymerization temperature is within the range of 200 to 280°C, the polymerization rate and the productivity are high, and thus coloring and gelation can be effectively suppressed. When a melt extruder is employed in the stage of increasing the degree of polymerization, it is preferable that the polymerization temperature be 370°C or less. When the polymerization is performed under the above conditions, the decomposition of the polyamide hardly occurs, and thus a semi-aromatic polyamide resin with less degradation is obtained.

In the manufacturing of the semi-aromatic polyamide resin of the present invention, a phosphorus-based compound, such as phosphoric acid, phosphorous acid, hypophosphorous acid or a salt or ester thereof, may be used as a catalyst. Examples of the above salt and ester include: salts of phosphoric acid, phosphorous acid and hypophosphorous acid with metals such as potassium, sodium, magnesium, vanadium, calcium, zinc, cobalt, manganese, tin, tungsten, germanium, titanium and antimony; ammonium salts of phosphoric acid, phosphorous acid and hypophosphorous acid; and ethyl esters, isopropyl esters, butyl esters, hexyl esters, isodecyl esters, octadecyl esters, decyl esters, stearyl esters and phenyl esters of phosphoric acid, phosphorous acid and hypophosphorous acid. Of these, sodium hypophosphite and phosphorous acid are preferable in terms of the degree of acceleration of the polycondensation reaction rate, the degree of suppression of side reaction, economic efficiency. The amount of the phosphorus-based compound used is within the range of preferably 0.01 to 5% by mass, more preferably 0.05 to 2% by mass, and still more preferably 0.07 to 1% by mass with respect to the total mass of the dicarboxylic acid component and the diamine component.

The intrinsic viscosity $[\eta]$ of the semi-aromatic polyamide resin of the present invention is normally within the range of 0.4 to 3.0 dl/g as measured in concentrated sulfuric acid at 30°C, and the above range depends on applications. In terms of adhesive properties to other materials, the compatibility in a polymer alloy and the balance between melt flowability and moldability, the intrinsic viscosity falls within the range of preferably 0.5 to 2.0 dl/g, and more preferably 0.6 to 1.8 dl/g.

In terms of increasing the crystallization degree to improve the mechanical properties, the melting point of the semi-aromatic polyamide resin of the present invention is preferably 250°C or higher, and more preferably within the range of 270 to 330°C.

Since the semi-aromatic polyamide resin of the present invention is excellent in adhesive properties and compatibility to other materials, this polyamide resin, together with an additional material, can form a polyamide resin composition which can be suitably used for multicolor molding and as a polymer alloy. Examples of the additional material usable for multicolor molding and in a polymer alloy include additional resins other than the semi-aromatic polyamide resin of the present invention, paper, wood, metals, nonwoven fabrics and fibers. Two or more of the above materials may be used for multicolor molding and in a polymer alloy without any problems. The semi-aromatic polyamide resin of the present invention can be preferably used particularly in multicolor molded articles having portions composed of the semi-aromatic polyamide resin of the present invention and portions composed of an additional resin other than the semi-aromatic polyamide resin of the present invention. Further to this, the semi-aromatic polyamide resin can be preferably used in a polyamide resin composition comprising the semi-aromatic polyamide resin of the present invention and an additional resin other than the semi-aromatic polyamide resin of the present invention.

Examples of the additional resin which can be used as the above additional material usable for multicolor molding and in a polymer alloy include: polyolefin-based resins such as low density polyethylene, medium density polyethylene, high density polyethylene, polypropylene, ethylene-propylene copolymers, ethylene-butene copolymers, ethylene-vinyl acetate copolymers, saponified ethylene-vinyl acetate copolymers, ethylene-acrylic acid copolymers, ethylene-methacrylic acid copolymers, ethylene-methyl acrylate copolymers, ethylene-methyl methacrylate copolymers, ethylene-ethyl acrylate copolymers, polybutadiene, ethylene-propylene-diene copolymers and polystyrene; polyester-based resins such as polybutylene terephthalate, polyethylene terephthalate, polyethylene naphthalate, polybutylene naphthalate, polyethylene isophthalate, polyarylate and liquid crystal polyester; polyether resins such as polyacetal and polyphenylene oxide; polysulfone resins such as polysulfone and polyethersulfone; polythioether-based resins such as polyphenylene sulfide and polythioether sulfone; polyketone-based resins such as polyether ether ketone and polyallyl ether ketone; polynitrile-based resins such as polyacrylonitrile, polymethacrylonitrile, acrylonitrile-styrene copolymers, acrylonitrile-butadiene-styrene copolymers and methacrylonitrile-butadiene-styrene copolymers; polymethacrylate-based resins such as poly(methyl methacrylate) and poly(ethyl methacrylate); polyvinyl ester-based resins such as polyvinyl acetate; polyvinyl chloride-based resins such as polyvinylidene chloride, polyvinyl chloride, vinyl chloride-vinylidene chloride copolymers and vinylidene chloride-methyl acrylate copolymers; cellulose-based resins such as cellulose acetate and cellulose butyrate; fluorine-based resins such as polyvinylidene fluoride; polyvinyl fluoride, ethylene-tetrafluoroethylene copolymers, polychlorotrifluoroethylene, ethylene-chlorotrifluoroethylene copolymers, tetrafluoroethylene-hexafluoropropylene copolymers and tetrafluoroethylene-hexafluoropropylene-vinylidene fluoride copolymers; polycarbonate-based resins such as polycarbonate; polyimide-based resins such as thermoplastic polyimide, polyamideimide and polyetherimide; thermoplastic polyurethane resins; and polyamide-based resins such as polyamide 6, polyamide 66, polyamide 46, polyamide 610, polyamide 612, polyamide 11, polyamide 12, poly(metaxylylene adipamide) (MXD6), poly(hexamethylene terephthalamide) (PA6T), poly(nonamethylene terephthalamide) (PA9T), poly(decamethylene terephthalamide) (PA10T), poly(dodecamethylene terephthalamide) (PA12T), poly(bis(4-aminocyclohexyl)methane dodecamide) (PACM12) and copolymers of polyamide raw monomers forming the above polyamide-based resins and/or several types of the polyamide raw monomers. Two or more of the above resins may be used for multicolor molding and in a polymer alloy without any problems.

Desirably, the above additional resin is modified. Known types of modification may be employed. Examples of the types of modification include: modification with α,β-unsaturated carboxylic acids and/or derivatives thereof; modification with crosslinking monomers; and modification with functional group-containing monomers and/or derivatives thereof. Preferably, the additional resin is a resin modified with an α,β-unsaturated carboxylic acid and/or a derivative thereof since such a resin exhibits high adhesive properties and compatibility to the semi-aromatic polyamide resin of the present invention.

Herein, the "modification" refers to the fact that residues of the monomers used for modification, for example, residues derived from α,β-unsaturated carboxylic acids and/or derivatives thereof, are present in the main chain or the side chains of the additional resin. The modification may be performed by means of known technology such as random copolymerization or graft polymerization. In terms of impact resistance of molded articles comprising a polyamide resin composition to be obtained, modification by graft polymerization is preferable. No particular limitation is imposed on the specific modification method. The modification may be performed by means of known methods disclosed in patent publications such as Japanese Patent Publications Nos. Sho 39-6810, Sho 52-43677, Sho 53-5716, Sho 56-9925 and Sho 58-445.

Examples of the above α,β-unsaturated carboxylic acids and/or derivatives thereof include acrylic acid, methacrylic acid, ethacrylic acid, maleic acid, fumaric acid, itaconic acid, crotonic acid, mesaconic acid, citraconic acid, glutaconic acid, monomethyl maleate, monoethyl maleate, maleic anhydride, itaconic anhydride and citraconic anhydride. In particular, maleic anhydride and acrylic acid are preferable. The content of the unsaturated carboxylic acid is preferably 2 to 30 mol%, more preferably 2 to 15 mol%, and still more preferably 3 to 12 mol% with respect to the monomer units in the main chain constituting the additional resin.

Examples of the above functional group-containing monomers include epoxy group-containing compounds such as glycidyl acrylate, glycidyl itaconate and glycidyl citraconate.

In the polyamide resin composition of the present invention, when the resin modified with the α,β-unsaturated carboxylic acid and/or the derivative thereof is used as the additional resin, it is preferable that the resin modified with the α,β-unsaturated carboxylic acid and/or the derivative thereof be a resin prepared by modifying, with an α,β-unsaturated carboxylic acid and/or a derivative thereof, at least one resin selected from the group consisting of polyolefin-based resins, polyester-based resins, polythioether-based resins, fluorine-based resin and polyamide-based resin. It is more preferable that the modified resin be a resin prepared by modifying, with an α,β-unsaturated carboxylic acid and/or a derivative thereof, at least one resin selected from the group consisting of low density polyethylene, medium density polyethylene, high density polyethylene, polypropylene, ethylene-propylene copolymers, ethylene-butene copolymers, ethylene-propylene-diene copolymers, polystyrene, polyarylate, polyphenylene sulfide, polyvinylidene fluoride and ethylene-tetrafluoroethylene copolymers.

In the polyamide resin composition of the present invention, the content of the additional resin is normally preferably 1 to 100 parts by mass, more preferably 3 to 50 parts by.mass, and particularly preferably 5 to 30 parts by mass with respect to 100 parts by mass of the semi-aromatic polyamide resin of the present invention.

The semi-aromatic polyamide resin of the present invention and the polyamide resin composition comprising this polyamide resin may comprise a filler. Normally, the amount of the filler added is preferably 200 parts by mass or less with respect to 100 parts by mass of the semi-aromatic polyamide resin. Specific examples of the filler include: fibrous fillers such as glass fibers, carbon fibers, boron fibers, aramid fibers and liquid crystalline polyester fibers; needle-like fillers such as potassium titanate whiskers, aluminum borate whiskers, zinc oxide whiskers and calcium carbonate whiskers; and powdery fillers such as talc, mica, kaolin, clay, calcium carbonate, silica, silica-alumina, alumina, titanium dioxide, graphite, molybdenum disulfide, montmorillonite, polytetrafluoroethylene and high molecular weight polyethylene. One or more of the above fillers may be employed. Of these, glass fibers, carbon fibers, potassium titanate whiskers and aluminum borate whiskers are preferably used in terms of reinforcing effects. In addition to this, aramid fibers, carbon fibers, potassium titanate whiskers, calcium carbonate whiskers, zinc oxide whiskers, talc, mica, molybdenum disulfide, graphite, polytetrafluoroethylene and high molecular weight polyethylene are preferably used in terms of slidability. Furthermore, silica, alumina, talc, mica and aluminum borate whiskers are preferably used in terms of dimensional stability. The fillers may be subjected to surface treatment with a silane coupling agent or a titanium-based coupling agent.

The semi-aromatic polyamide resin of the present invention and the polyamide resin composition comprising this polyamide resin may comprise an organic stabilizing agent. Examples of the organic stabilizing agent include phenol-based stabilizing agents, amine-based stabilizing agents, thioether-based stabilizing agents and phosphorus-based stabilizing agents. One or more of the above stabilizing agents may be employed. Of these, the phenol-based stabilizing agents, the amine-based stabilizing agents and the phosphorus-based stabilizing agents are preferred, and stabilizing agents which do not coordinate to copper are more preferred. The content of the organic stabilizing agent is preferably within the range of 0.01 to 5 parts by mass with respect to 100 parts by mass of the semi-aromatic polyamide resin.

The semi-aromatic polyamide resin of the present invention and the polyamide resin composition comprising this polyamide resin may comprise various additives in addition to the above filler and organic stabilizing agent. The content of such additives is preferably 100 parts by mass or less with respect to 100 parts by mass of the semi-aromatic polyamide resin. Examples of such additives include: copper-based stabilizing agents, anti-oxidizing agents, conductive fillers, flame retardants such as brominated polymers, antimony oxide, metal oxides, metal hydroxides, phosphorous-based compounds, phosphorus-containing polymers, silicone-based compounds and nitrogen-containing compounds; ultraviolet absorbing agents such as benzophenone-based compounds, benzotriazole-based compounds and benzoate-based compounds; antistatic agents; plasticizing agents; lubricants; nucleating agents; processing aids; light fastness stabilizing agents; coloring agents such as pigments and dyes; impact resistance modifiers; and the like.

Various mixing methods and blending methods normally used in the mixing technique for resin may be used as a method for mixing the above additional resin, filler, organic stabilizing agent and other additives with the semi-aromatic polyamide resin of the present invention. Preferably, the semi-aromatic polyamide resin, the additional resin, the filler, the organic stabilizing agent and other additives are used in a form of powder or pellet. In order to obtain a uniform polyamide resin composition, it is preferable, for example, that melt mixing be performed by use of a high-shear mixer such as a twin screw extruder at temperatures suitable for bringing the semi-aromatic polyamide resin into a molten state. In this case, mixing is facilitated by mixing all the components in a solid form (for example, a powder form or a pellet form) together before melt mixing.

The semi-aromatic polyamide resin of the present invention and the polyamide resin composition comprising this polyamide resin can be suitably used in various molded articles such as injection molded articles and extrusion molded articles. Furthermore, the semi-aromatic polyamide resin of the present invention is excellent not only in adhesive properties to other materials and compatibility in a polymer alloy with other materials but also in various properties such as mechanical strength, low water absorbency, dimensional stability and residence stability. Therefore, molded articles made of the semi-aromatic polyamide resin of the present invention or of the polyamide resin composition comprising this polyamide resin can be used in wide-ranging applications such as electrical/electronic materials, automobile parts, industrial resources, industrial materials and household products. In particular, the above molded articles can be preferably used in automobile part applications.

In particular, the semi-aromatic polyamide resin of the present invention can be preferably used as the material for forming a chemical transport hose. A preferred chemical transport hose includes at least one layer composed of a polyamide resin composition comprising the semi-aromatic polyamide resin of the present invention and a polyolefin-based resin modified with an $\alpha,\beta$-unsaturated carboxylic acid and/or a derivative thereof. As described later, it is preferable that the polyamide resin composition comprises 10 to 99 parts by mass of the semi-aromatic polyamide resin of the present invention and 90 to 1 part by mass of the polyolefin-based resin modified with the $\alpha,\beta$-unsaturated carboxylic acid and/or the derivative thereof.

The polyolefin-based resin constituting the above polyolefin-based resin modified with the $\alpha,\beta$-unsaturated carboxylic acid and/or the derivative thereof refers to polymers of olefin monomers or copolymers thereof. Specific examples of the olefin monomers used include ethylene, propylene, 1-butene, isobutylene, 2-butene, cyclobutene, 3-methyl-1-butene, 1-pentene, 4-methyl-1-pentene, cyclopentene, 1-hexene, cyclohexene, 1-octene, 1-decene and 1-dodecene.

In the chemical transport hose, the use of the polyolefin-based resin modified with the $\alpha,\beta$-unsaturated carboxylic

acid and/or the derivative thereof can improve the compatibility to the semi-aromatic polyamide resin of the present invention. Examples of such an $\alpha,\beta$-unsaturated carboxylic acid and/or a derivative thereof include $\alpha,\beta$-unsaturated monocarboxylic acids and esters thereof and $\alpha,\beta$-unsaturated dicarboxylic acids and anhydrides, monoesters and diesters thereof. Specific examples include acrylic acid, methacrylic acid, ethacrylic acid, maleic acid, fumaric acid, itaconic acid, crotonic acid, mesaconic acid, citraconic acid, glutaconic acid, monomethyl maleate, monoethyl maleate, maleic anhydride, itaconic anhydride and citraconic anhydride. In particular, maleic anhydride and acrylic acid are preferred.

In the above chemical transport hose, when the content of the "$\alpha,\beta$-unsaturated carboxylic acid and/or the derivative thereof" in the polyolefin-based resin modified with the $\alpha,\beta$-unsaturated carboxylic acid and/or the derivative thereof is too small with respect to the total molar number of the olefin monomers constituting the polyolefin-based resin, physical properties such as impact resistance may decrease. When the content is too large, the moldability tends to decrease. Therefore, the content thereof is preferably 0.5 to 30 mol%, more preferably 1 to 15 mol%, and particularly preferably 2 to 12 mol%.

Furthermore, a description is given of a case in which the degree of modification of the polyolefin-based resin used in the chemical transport hose is expressed in terms of percent by mass. When the content of the residues of the $\alpha,\beta$-unsaturated carboxylic acid and/or the derivative thereof in the polyolefin-based resin modified with the $\alpha,\beta$-unsaturated carboxylic acid and/or the derivative thereof is too small, the impact resistance of the obtained chemical transport hose tends to decrease. Furthermore, when the content is too large, not only the impact resistance of the obtained chemical transport hose but also the flowability of the polyamide resin composition deteriorates, whereby the moldability tends to deteriorate. Therefore, the modification is performed such that the content thereof is preferably 0.1 to 10% by mass, and more preferably 0.2 to 5% by mass.

As the polyolefin-based resin which is modified with the $\alpha,\beta$-unsaturated carboxylic acid and/or the derivative thereof and is used in the chemical transport hose, a resin in which monomer residues used for modification are introduced in a grafted manner is more preferable than a resin in which the monomer residues are introduced in the main chain, in terms of low-temperature impact resistance

Furthermore, the less the amount of unreacted remaining monomers is, the more preferable it is. For example, it is preferable that the amount thereof be 0.5% by mass or less.

The number average molecular weight of the polyolefin-based resin modified with the $\alpha,\beta$-unsaturated carboxylic acid and/or the derivative thereof is preferably 50,000 to 500,000, more preferably 100,000 to 300,000 in terms of achieving good impact resistance and moldability in a well balanced manner.

The polyamide resin composition used in the chemical transport hose comprises the semi-aromatic polyamide resin of the present invention and the polyolefin-based resin modified with the $\alpha,\beta$-unsaturated carboxylic acid and/or the derivative thereof in a mass ratio of preferably from 10 to 99 parts by mass to from 90 to 1 part by mass. In terms of heat resistance and chemical resistance, the ratio of the semi-aromatic polyamide resin to the modified polyolefin-based resin is more preferably from 60 to 97 parts by mass to from 40 to 3 parts by mass, and still more preferably from 75 to 95 parts by mass to from 25 to 5 parts by mass.

Moreover, in the polyamide resin composition used in the chemical transport hose, the ratio of the total mass of the semi-aromatic polyamide resin and the polyolefin-based resin modified with the $\alpha,\beta$-unsaturated carboxylic acid and/or the derivative thereof is preferably 40 to 100% by mass, more preferably 80 to 100% by mass, and still more preferably 90 to 100% by mass.

The polyamide resin composition used in the chemical transport hose may comprise an additional resin other than the semi-aromatic polyamide resin of the present invention and the polyolefin-based resin modified with the $\alpha,\beta$-unsaturated carboxylic acid and/or the derivative thereof. Specific examples of such additional resin include the above-exemplified additional resins usable as the additional material which can be used when the semi-aromatic polyamide resin of the present invention is used for multicolor molding and in a polymer alloy (except for the polyolefin-based resins modified with the $\alpha,\beta$-unsaturated carboxylic acid and/or the derivative thereof). Two or more types of such resins may be used together.

The polyamide resin composition used in the chemical transport hose may also comprise a filler. In this case, the amount of the filler added is preferably 60% by mass or less with respect to the total mass of the polyamide resin composition. Specific examples of the filler include the above-exemplified fillers which can be comprised in the polyamide resin composition of the present invention.

The polyamide resin composition used in the chemical transport hose may further comprise an organic stabilizing agent and other various additives. As such organic stabilizing agent and additives can be used one or more types of the above-exemplified organic stabilizing agents and additives which can be comprised in the polyamide resin composition of the present invention. Preferably, the content of the organic stabilizing agent is within the range of 0.01 to 5 parts by mass with respect to 100 parts by mass of the semi-aromatic polyamide resin. Preferably; the content of the additives is 100 parts by mass or less with respect to 100 parts by mass of the semi-aromatic polyamide resin.

Various mixing methods and blending methods normally used in the mixing technique for resin may be used as a method for mixing the above additional resin, filler, organic stabilizing agent and other additives with the polyamide resin composition used in the chemical transport hose. Preferably, the semi-aromatic polyamide resin, the polyolefin-based resin modified with the $\alpha,\beta$-unsaturated carboxylic acid and/or the derivative thereof, the additional resin, the filler, the organic stabilizing agent and other additives are used in a form of powder or pellet. In order to obtain a uniform polyamide resin composition, it is preferable, for example, that melt mixing be performed by use of a high-shear mixer such as a twin screw extruder at temperatures suitable for bringing the semi-aromatic polyamide resin into a molten state. In this case, mixing is facilitated by mixing all the components in a solid form (for example, a powder form or a pellet form) together before melt mixing.

The chemical transport hose of the present invention includes at least one layer composed of the above-described polyamide resin composition. Therefore, the chemical transport hose of the present invention may have a single-layer structure composed of a layer of such a polyamide resin composition or may have a multi-layer structure comprising layers of such a polyamide resin composition. Furthermore, other resin layers may be used for multilayering. Judging from the mechanism of a hose manufacturing apparatus, in a preferred embodiment, the chemical transport hose is composed of 7 or less layers, more preferably 1 to 4 layers, and still more preferably 1 or 2 layers. Furthermore, in a preferred embodiment of the multi-layer hose, the above-mentioned polyamide resin composition is disposed in the innermost layer.

When the chemical transport hose of the present invention is used as a multi-layer hose, examples of the resin layer laminated.with the layer composed of the polyamide resin composition include a layer composed of a thermoplastic resin. Examples of the thermoplastic resin which can be used include: polyolefin-based resins such as low density polyethylene, medium density polyethylene, high density polyethylene, polypropylene, ethylene-propylene copolymers, ethylene-butene copolymers, ethylene-vinyl acetate copolymers, saponified ethylene-vinyl acetate copolymers, ethylene-acrylic acid copolymers, ethylene-methacrylic acid copolymers, ethylene-methyl acrylate copolymers, ethylene-methyl methacrylate copolymers and ethylene-ethyl acrylate copolymers; modified polyolefin-based resins prepared by modifying the above polyolefin-based resins with carboxyl group-containing compounds such as acrylic acid, methacrylic acid, maleic acid, fumaric acid, itaconic acid, crotonic acid, mesaconic acid, citraconic acid and glutaconic acid, with metal salts thereof, with acid anhydrides such as maleic anhydride, itaconic anhydride and citraconic anhydride, with epoxy group-containing compounds such as glycidyl acrylate, glycidyl itaconate and glycidyl citraconate, or with other compounds; polyester-based resins such as polybutylene terephthalate, polyethylene terephthalate, polyethylene naphthalate, polybutylene naphthalate, polyethylene isophthalate, polyarylate and liquid crystal polyester; polyether resins such as polyacetal and polyphenylene oxide; polysulfone resins such as polysulfone and polyethersulfone; polythioether-based resins such as polyphenylene sulfide and polythioether sulfone; polyketone-based resins such as polyether ether ketone and polyallyl ether ketone; polynitrile-based resins such as polyacrylonitrile, polymethacrylonitrile, acrylonitrile-styrene copolymers, acrylonitrile-butadiene-styrene copolymers and methacrylonitrile-butadiene-styrene copolymers; polymethacrylate-based resins such as poly(methyl methacrylate) and poly(ethyl methacrylate); polyvinyl ester-based resins such as polyvinyl acetate; polyvinyl chloride-based resins such as polyvinylidene chloride, polyvinyl chloride, vinyl chloride-vinylidene chloride copolymers and vinylidene chloride-methyl acrylate copolymers; cellulose-based resins such as cellulose acetate and cellulose butyrate; fluorine-based resins such as polyvinylidene fluoride, polyvinyl fluoride, ethylene-tetrafluoroethylene copolymers, polychlorotrifluoroethylene, ethylene-chlorotrifluoroethylene.copolymers, tetrafluoroethylene-hexafluoropropylene copolymers and tetrafluoroethylene-hexafluoropropylene-vinylidene fluoride copolymers; polycarbonate-based resins such as polycarbonate; polyimide-based resins such as thermoplastic polyimide, polyamideimide and polyetherimide; thermoplastic polyurethane resins; and polyamide-based resins such as polyamide 6, polyamide 66, polyamide 46, polyamide 610, polyamide 612, poly(metaxylylene adipamide) (MXD6), poly(hexamethylene terephthalamide) (PA6T), poly(nonamethylene terephthalamide) (PA9T), poly(decamethylene terephthalamide) (PA10T), poly(dodecamethylene terephthalamide) (PA12T), poly(bis(4-aminocyclohexyl)methane dodecamide) (PACM12) and copolymers of polyamide raw monomers forming the above polyamide-based resins and/or several types of the polyamide raw monomers. Of these, the polyolefin-based resins, the polyester-based resins, the polyamide-based resins, the polythioether-based resins and the fluorine-based resins are preferably used. Furthermore, the polyolefin-based resins, the polyester-based resins, the polyamide-based resins and the fluorine-based resins are more preferably used and the polyamide-based resins are most preferably used.

Moreover, any materials other than the thermoplastic resins can be laminated, such as paper, metal-based materials, non-stretched-, uniaxially stretched-, and biaxially stretched-plastic films and sheets, woven fabrics, nonwoven fabrics, metallic cotton and wood.

Examples of the method for manufacturing the chemical transport hose of the present invention having a layer composed of the polyamide resin composition include: a method (co-extrusion method) in which materials in a molten state are extruded by means of a number of extruders corresponding to the number of layers or materials and are laminated simultaneously at the inside or outside of a die; and a method (coating method) in which resin is successively integrated and laminated with the outside of a previously manufactured single-layer hose by using an adhesive in accordance with need. Preferably, the chemical transport hose of the present invention is manufactured by extruding the polyamide resin composition alone or by a co-extrusion method in which the polyamide resin composition and other thermoplastic resin are coextruded in a molten state and are heat-fused (melt-bonded) to produce a hose having a multi-layer structure in a single stage.

The chemical transport hose of the present invention having a layer of the polyamide resin composition may have an undulated region. The undulated region is a region formed into a wavy shape, a bellows-shape, an accordion shape, a corrugated shape. The undulated region may be formed over the entire length of the chemical transport hose or may be formed partially in some middle region. The undulated region can be easily formed by forming a straight hose and subsequently subjecting the hose to mold-forming to obtain a predetermined undulated shape. By providing such an undulated region, shock-absorbing properties are imparted, and the ease of installation is improved. Furthermore, required parts may be added, and the hose can be bent and shaped into an L-shape, a U-shape.

No particular limitation is imposed on the outer diameter, inner diameter, wall thickness of the chemical transport hose of the present invention. However, considering the flow rate of circulating chemical it is preferable that the hose have a wall thickness capable of preventing an increase of permeability to chemicals and capable of maintaining the burst pressure of an ordinary hose. In addition, it is preferable that the hose have flexibility sufficient to provide the ease of installation operation and good vibration resistance during use. Preferably, the chemical transport hose has an outer diameter of 4 to 200 mm, an inner diameter of 3 to 160 mm and a wall thickness of 0.5 to 20 mm.

The chemical transport hose of the present invention has at least one layer of a polyamide resin composition comprising: the abovementioned semi-aromatic polyamide resin comprising the aromatic dicarboxylic acid units and the aliphatic diamine units; and the polyolefin-based resin modified with the $\alpha,\beta$-unsaturated carboxylic acid and/or the derivative thereof. Therefore, the chemical transport hose has high chemical resistance and heat resistance even under high temperature conditions in which, for example, chemicals with a temperature of 50°C or higher instantaneously or continuously flow or circulate inside the hose.

Examples of the chemicals which can be transported through the chemical transport hose of the present invention include: aromatic hydrocarbon-based solvents such as benzene, toluene and xylene; alcohols or phenol-based solvents such as methanol, ethanol, propanol, butanol, pentanol, ethylene glycol, propylene glycol, diethylene glycol, phenol, cresol, polyethylene glycol and polypropylene glycol; ether-based solvents such as dimethyl ether, dipropyl ether, methyl-t-butyl ether, dioxane and tetrahydrofuran; halogen-based solvents such as chloroform, methylene chloride, trichloroethylene, ethylene dichloride, perchloroethylene, monochloroethane, dichloroethane, tetrachloroethane, perchloroethane and chlorobenzene; ketone-based solvents such as acetone, methyl ethyl ketone, diethyl ketone and acetophenone; an urea solution; gasoline-based fuels such as gasoline, kerosene, diesel fuel, alcohol-containing gasoline, oxygen-containing gasoline, amine-containing gasoline and sour gasoline; brake oils such as castor oil-based brake fluids, glycol ether-based brake fluids, boric acid ester-based brake fluids, brake fluids for very cold regions, silicone oil-based brake fluids and mineral oil-based brake fluids; power steering oil; hydrogen sulfide-containing oil; engine coolant; window washing liquid; pharmaceutical agents; ink; and coating. Moreover, in the present invention, aqueous solutions containing the above exemplified chemicals are also chemicals which can be transported through the chemical transport hose of the present invention. Furthermore, the chemicals may be gas, and examples of the gas which can be transported through the chemical transport hose of the present invention include Freon-11, Freon-12, Freon-21, Freon-22, Freon-113, Freon-114, Freon-115, Freon-134A, Freon-32, Freon-123, Freon-124, Freon-125, Freon-143A, Freon-141b, Freon-142b, Freon-225, Freon-C318, Freon-502, methyl chloride, ethyl chloride, air, oxygen, hydrogen, nitrogen, carbon dioxide, methane, propane, isobutane, n-butane, argon, helium and xenon.

Specific examples of the applications of the chemical transport hose of the present invention include a feed hose, a return hose, an evaporation hose, a fuel filler hose, an ORVR hose, a reserve hose, a vent hose, an oil hose, a diesel fuel hose, an oil-drilling hose, an alcohol-containing gasoline hose, a brake hose, a window washing liquid hose, an engine coolant (LLC) hose, a reservoir tank hose, an urea solution transport hose, a cooling hose for cooling water or a cooling medium, a cooling medium hose for an air conditioner, a heater hose, a road heating hose, a floor heating hose, a hose for infrastructure supply, a hose for a fire extinguisher or fire extinguishing facility, a cooling apparatus hose for medical use, a hose for ink, a hose for spraying coating, a hose for other chemicals and a gas hose. In particular, the chemical transport hose of the present invention is useful as an engine coolant (LLC) hose, a diesel fuel hose, an oil-drilling hose, an alcohol-containing gasoline hose, an urea solution transport hose, a heater hose, a reservoir tank hose, a road heating hose or a floor-heating hose, which are expected to be used under severe conditions. Of these, the chemical transport hose is useful as a chemical transport hose with a purpose of transporting engine coolant (LLC), diesel fuel, oil-drilling liquid, alcohol-containing gasoline or a urea solution.

Moreover, the semi-aromatic polyamide resin of the present invention can be preferably used as a material for forming a pipe joint. A preferred pipe joint comprises a polyamide resin composition comprising: the semi-aromatic polyamide resin of the present invention, resin-reinforcing fibers and a polyolefin-based resin modified with an $\alpha,\beta$-unsaturated carboxylic acid and/or a derivative thereof. As described later, the content of the resin-reinforcing fibers in the polyamide resin composition is preferably 10 to 200 parts by mass with respect to 100 parts by mass of the semi-aromatic polyamide resin of the present invention. Furthermore, the content of the polyolefin-based resin modified with the $\alpha,\beta$-unsaturated carboxylic acid and/or the derivative thereof is preferably 5 to 50 parts by mass with respect to 100 parts by mass of the semi-aromatic polyamide resin of the present invention.

Examples of the above resin-reinforcing fibers include glass fibers, boron fibers, liquid crystalline polyester fibers and fully aromatic polyamide resin fibers (for example, aramid fibers). Of these, glass fibers such as alkali free borosilicate glass and alkali containing C-glass can be preferably used in terms of the intended balance between resin-reinforcing effects and cost

The amount of the resin-reinforcing fibers added is preferably 10 to 200 parts by mass, and more preferably 15 to 100 parts by mass with respect to 100 parts by mass of the semi-aromatic polyamide resin. When the content of the resin-reinforcing fibers added is larger than the above range, the melt flowability may deteriorate significantly, and thus the moldability may deteriorate significantly. When the amount added is less than the above range, the improvement of various properties may not be sufficiently obtained. In the above range, various properties such as mechanical strength can be improved while the moldability is maintained to a certain extent.

As the resin-reinforcing fibers, fibers having a long fiber shape of a diameter of 3 to 30 $\mu$m and a length of 5 to 50 mm or having a short fiber shape of a diameter of 3 to 30 $\mu$m and a length of 0.05 to 5 mm can be preferably used. Furthermore, as the resin-reinforcing fibers, fibers subjected to surface treatment with a titanate-, aluminum- or silane-based surface treatment agent can be preferably used in order to improve compatibility and affinity with a thermoplastic resin and to improve workability. For example, when glass fibers are used as the resin-reinforcing fibers, fibers having a surface processed with a silane coupling agent can be preferably used.

The resin-reinforcing fibers are usually fed from a hopper simultaneously with the semi-aromatic polyamide resin or from a side feeder to a single or twin screw extruder and are mixed and dispersed in the polyamide resin composition.

In order to improve the impact resistance, it is preferable that the polyamide resin composition constituting the pipe joint comprises a polyolefin-based resin modified with the $\alpha,\beta$-unsaturated carboxylic acid and/or the derivative thereof. As the' polyolefin-based resin modified with the $\alpha,\beta$-unsaturated carboxylic acid and/or the derivative thereof and used in this case, the resin described as the polyolefin-based resin which is modified with the $\alpha,\beta$-unsaturated carboxylic acid and/or the derivative thereof and which is used in the chemical transport hose may be used.

In the polyamide resin composition used in the pipe joint, the content of the polyolefin-based resin modified with the $\alpha,\beta$-unsaturated carboxylic acid and/or the derivative thereof is preferably 5 to 50 parts by mass; and more preferably 7 to 20 parts by mass with respect to 100 parts by mass of the semi-aromatic polyamide resin. When the content of the polyolefin-based resin modified with the $\alpha,\beta$-unsaturated carboxylic acid and/or the derivative thereof is less than 5 parts by mass, the effects of improving physical properties may not be sufficiently achieved. When the content exceeds 50 parts by mass, a reduction in physical properties such as weld strength may be significant, or a reduction in productivity such as strand breakage due to a reduction in melt tension may result.

The polyamide resin composition constituting the pipe joint of the present invention may further comprise a conductive filler. In this manner, electrical conductivity can be imparted to the obtained pipe joint. In the polyamide resin composition, when the amount of the conductive filler added is too low, the effects of improving electrical conductivity are not satisfactory. Therefore, in order to obtain sufficient antistatic properties, it is preferable that the conductive filler be added in an amount such that the specific volume resistivity of a molded article obtained by melt-extruding a polyamide resin composition comprising the conductive filler added thereto is 109 $\Omega$·cm or less, and particularly $10^6$ $\Omega$·cm or less. However, the addition of the conductive filler significantly decreases various physical properties of the polyamide resin composition, in particular, strength, elongation and impact resistance, and is likely to deteriorate the flowability. Therefore, it is desirable that the amount of the conductive filler added be as small as possible so long as a target electrical conductivity level is obtained. Hence, in the polyamide resin composition, the amount of the conductive filler added is within the range of preferably 3 to 30 parts by mass, more preferably 4 to 20 parts by mass, and still more preferably 5 to 15 parts by mass with respect to 100 parts by mass of the semi-aromatic polyamide resin.

The conductive filler useable in the present invention is a filler which can be added in order to impart electrical conductivity to the semi-aromatic polyamide resin. Examples of the shape of the conductive filler include a granular shape, a flake-like shape and a fiber-like shape.

Suitable examples of the granular-shaped conductive filler include carbon black and graphite. Suitable examples of the flake-like conductive filler include aluminum flake, nickel flake and nickel-coated mica. Suitable examples of the fiber-like conductive filler include carbon fibers, carbon-coated ceramic fibers, carbon whiskers, carbon nanotubes and metal fibers such as aluminum fibers, copper fibers, brass fibers and stainless fibers. Of these, carbon nanotubes, carbon black and carbon fibers are particularly preferably used.

As the carbon black, carbon black generally used for imparting electrical conductivity may be used. Preferred examples of such carbon black include: acetylene black obtained by incomplete combustion of acetylene gas; Ketjen black produced through furnace-type incomplete combustion of a crude oil; oil black; naphthalene black; thermal black; lamp black; channel black; roll black; and disk black. Of these, acetylene black and furnace black (Ketjen black) can be particularly preferably used since sufficient electrical conductivity can be achieved with addition of a small amount thereof.

Various carbon powders of carbon black are manufactured which are different in characteristics such as particle size, surface area, DBP oil absorption and ash content. No particular limitation is imposed on these characteristics of the carbon black which can be used in the present invention. However, carbon black having a good chain structure and a large aggregation density is preferred. In terms of impact resistance, it is not preferable to add a large amount of the carbon black. In order to obtain excellent electrical conductivity with addition of a smaller amount of carbon black, the average particle size thereof is preferably 500 nm or less, more preferably 5 to 100 nm, and still more preferably 10 to 70 nm. The surface area (by a BET method) is preferably 10 $m^2/g$ or more, more preferably 300 $m^2/g$ or more, and particularly preferably 500 to 1500 $m^2/g$. The DBP (dibutyl phthalate) oil absorption is preferably 50 ml/100 g or more, more preferably 100 ml/100 g or more, and still more preferably 300 ml/100 g or more. The ash content is preferably 0.5% by mass or less, and more preferably 0.3% by mass or less. As used herein, the DBP oil absorption refers to a value measured by the method prescribed in ASTM D-2414. Carbon black having a volatile content of less than 1.0% by mass is more preferable.

Examples of the carbon fibers which can be used as the conductive filler include PAN-based carbon fibers and pitch-based carbon fibers. The PAN-based carbon fibers are preferable in terms of the balance between physical properties and electronic conductivity. Furthermore, carbon fibers having a fiber diameter of 5 to 50 $\mu$m are preferable.

The conductive filler may be subjected to surface treatment with a surface-treatment agent such as a titanate-based, aluminum-based or silane-based surface-treatment agent in order to improve the compatibility and affinity with a thermoplastic resin and to improve the workability and may be subjected to bundling treatment with a sizing agent such as polyamide or polyurethane resin. Further, a pelletized conductive filler may be used in order to improve melt-kneading workability.

In the polyamide resin composition used in the pipe joint, the ratio of the total mass of the semi-aromatic polyamide resin of the present invention, the resin-reinforcing fibers and the polyolefin-based resin modified with the $\alpha,\beta$-unsaturated carboxylic acid and/or the derivative thereof is preferably 50 to 100% by mass, more preferably 80 to 100% by mass, and still more preferably 90 to 100% by mass. (In this instance, when the conductive filler is added, the total mass includes the -mass of the conductive filler.)

The polyamide resin composition used in the pipe joint may comprise additional components within the range which dose not impair the effects of the present invention, the above additional components being components other than the semi-aromatic polyamide resin of the present invention, the resin-reinforcing fibers, the polyolefin-based resin modified with the $\alpha,\beta$-unsaturated carboxylic acid and/or the derivative thereof and the conductive filler. Examples of the additional components include: resins other than the semi-aromatic polyamide resin of the present invention and other than the polyolefin-based resin modified with the $\alpha,\beta$-unsaturated carboxylic acid and/or the derivative thereof; additional fillers other than the above resin-reinforcing fibers and the above conductive fillers; organic stabilizing agents; and various additives.

Examples of the above additional resin include the above-exemplified additional resins usable as the additional material which can be used when the semi-aromatic polyamide resin of the present invention is used for multicolor molding and in a polymer alloy (except for the polyolefin-based resins modified with the $\alpha,\beta$-unsaturated carboxylic acid and/or the derivative thereof). Two or more types of such resins may be used together.

Examples of the additional filler other than the above the resin-reinforcing fibers and the conductive filler include: needle-like fillers such as potassium titanate whiskers, aluminum borate whiskers, zinc oxide whiskers and calcium carbonate whiskers; and powdery fillers such as talc, mica, kaolin, clay, calcium carbonate, silica, silica-alumina, alumina, titanium dioxide, molybdenum disulfide, montmorillonite, polytetrafluoroethylene and high molecular weight polyethylene. One or more of the above fillers may be employed. Of these, potassium titanate whiskers and aluminum borate whiskers are preferably used in terms of the reinforcing effects. In addition, potassium titanate whiskers, calcium carbonate whiskers, zinc oxide whiskers, talc, mica, molybdenum disulfide, polytetrafluoroethylene and high molecular weight polyethylene are preferably used in terms of slidability. Furthermore, silica, alumina, talc, mica and aluminum borate whiskers are preferably used in terms of dimensional stability. The filler may be subjected to surface treatment with a silane coupling agent or a titanium-based coupling agent.

As the abovementioned organic stabilizing agent and additives may be used one or more types of the above exemplified organic stabilizing agent and additives (other than the conductive filler) which can be comprised in the polyamide resin composition of the present invention. The content of the organic stabilizing agent is preferably 0.01 to 5 parts by mass with respect to 100 parts by mass of the semi-aromatic polyamide resin of the present invention. The amount of the additives added is preferably 100 parts by mass or less with respect to 100 parts by mass of the semi-aromatic polyamide resin of the present invention.

Various mixing methods and blending methods normally used in the mixing technique for resin may be used as a method for mixing the above additional resin, filler, organic stabilizing agent and various additives with the polyamide resin composition used in the pipe joint. Preferably, the semi-aromatic polyamide resin, the polyolefin-based resin modified with the $\alpha,\beta$-unsaturated carboxylic acid and/or the derivative thereof, the additional resin, the filler, the organic stabilizing agent and various additives are used in a form of powder or pellet. In order to obtain a uniform polyamide resin composition, it is preferable, for example, that melt mixing be performed by use of a high-shear mixer such as a twin screw extruder at temperatures suitable for bringing the semi-aromatic polyamide resin into a molten state. In this case, mixing is facilitated by mixing all the components in a solid form (for example, a powder form or a pellet form) together before melt mixing.

The abovementioned polyamide resin composition can be molded into a pipe joint by means of various molding methods such as injection molding and extrusion molding. As for the practical mechanical properties of the above polyamide resin composition, the tensile strength is preferably 80 to 200 MPa and the bending strength is preferably 100 to 300 MPa. In addition, the bending elastic modulus is preferably 2 to 10 GPa. Furthermore, the notched Izod impact strength is preferably 100 to 300 J/m at 23°C and is preferably 100 to 300 J/m at -40°C. The electrical resistance (specific surface resistance) is preferably $1 \times 10^6$ Ω/sq or less when the conductive filler is added. Furthermore, the fuel permeability of the pipe joint is preferably 10 mg/day or less. The low-temperature impact resistance of the pipe joint is 6/10 times or less. The abovementioned tensile strength, bending strength, bending elastic modulus, notched Izod impact strength, electrical resistance (specific surface resistance), fuel permeability, and low-temperature impact resistance are values measured by means of methods described in respective sections of Examples below.

The pipe joint of the present invention is excellent not only in fuel barrier properties but also in other properties such as mechanical strength, low water absorbency, dimensional stability and residence stability. Therefore, this pipe joint can be used in wide-ranging applications such as electric-electronic materials, automobile components, industrial resources, industrial materials and household products.

In particular, specific examples of the pipe joint of the present invention include a fuel pipe quick connector having a tubular main body formed of the above polyamide resin composition. Fig. 1 shows a cross-section of a representative fuel pipe quick connector. The fuel pipe quick connector 1 shown in Fig. 1 mutually connects an end portion of a steel tube 2 and an end portion of a resin hose 3. A flange-shaped portion 4 provided in a position separated away from the end portion of the steel tube 2 is removably engaged with a retainer 5 of the connector 1, and fuel is sealed by a row of O-rings 6. Preferably, the retainer 5 is formed of the above polyamide resin composition. Furthermore, in the connection portion between the resin hose 3 and the connector 1, an end portion of the connector 1 takes a form of a slim nipple 7 having a plurality of barb portions 8 protruding in a radial direction. The end portion of the resin hose 3 is contact-fitted to the external surface of the nipple 7, and the fuel is sealed by the mechanical joining with the barb portions 8 and by an O-ring 9 provided between the hose and the nipple.

Examples of the method for manufacturing the fuel pipe quick connector include a method in which, after the parts therefor such as the tubular main body, the retainer and the O-rings are produced by injection molding these parts are assembled in respective predetermined positions.

The above fuel pipe quick connector is assembled into an assembly engaged with a resin hose and is used as a fuel pipe part. The fuel pipe quick connector and the resin hose may be mechanically joined by fitting but are preferably joined by means of at least one welding method selected from the group consisting of, for example, a spin welding method, a vibration welding method, a laser welding method and an ultrasonic welding method. In this manner, the hermeticity can be improved. Furthermore, the hermeticity can be improved by employing a thick-wall resin hose, a heat-shrinking tube, a Clip which can apply a sufficient clamping force to an overlapped portion after insertion.

The resin hose may have an undulated region in some middle region. The undulated region is a region formed by shaping an appropriate region in some middle region of the hose body into a wavy shape, a bellows-shape, an accordion shape, a corrugated shape. By providing such a region in which a plurality of folds of the undulated shape is annularly disposed, one side of the annular portion in this region can be compressed, and the other side can be extended outward. Therefore, the hose can be easily bent at any angle without causing stress fatigue and separation between layers.

As the resin hose, a polyamide resin hose having a layer comprising a polyamide-based resin such as polyamide 11 or polyamide 12 is preferably used. Preferably, the resin hose has a multi-layer structure including, in addition to the above layer, a layer comprising a resin having fuel permeation-preventing properties. Examples of the resin having fuel permeation-preventing properties include saponified ethylene-vinyl acetate copolymers (EVOH), poly(metaxylylene adipamide) (polyamide MXD6), polybutylene terephthalate (PBT), polyethylene naphthalate (PEN), polybutylene naphthalate (PBN), polyvinylidene fluoride (PVDF), ethylene-tetrafluoroethlene copolymers (ETFE), tetrafluoroethlene-hexafluoropropylene copolymers (TFE/HFP, FEP), tetrafluoroethlene-fluoro(alkylvinylether) copolymers (PFA), tetrafluoroethylene-hexafluoropropylene-vinylidene fluoride copolymers (TFE/HFP/VDF, THV) and poly(nonamethylene terephthalamide) (PA9T).

In a line in which liquid fuel flows, it is preferable to employ a configuration in which a layer composed of a composition comprising a conductive filler is disposed in the innermost portion in order to prevent damage caused by static electricity.

In view of the impact of pebbles, wear with other parts and flame resistance, a protection member (protector) may be disposed on the entire or a part of the outer periphery of the above resin hose. The protection member may be composed of epichlorohydrin rubber (ECO), acrylonitrile- butadiene rubber (NBR), a mixture of NBR and polyvinyl chloride, chlorosulfonated polyethylene rubber, chlorinated polyethylene rubber, acrylic rubber (ACM), chloroprene rubber (CR), ethylene-propylene rubber (EPR), ethylene-propylene-diene rubber (EPDM), a mixture rubber of NBR and EPDM, a vinyl chloride-based, olefin-based, ester-based or amide-based thermoplastic elastomer . The protection member may be poreless or may be formed as a sponge-like porous body by means of a known method. By forming the protection member as a porous body, a lightweight protection portion having excellent thermal insulating properties can be formed. In addition, the material cost can be reduced. Alternatively, the mechanical strength may be improved by adding glass fibers or the like. No particular limitation is imposed on the shape of the protection member. However, the protection member is usually a tubular member or a block-like member having a recess for receiving a resin hose. In the case of a tubular member, a resin hose may be inserted into the tubular member produced in advance. Alternatively, the tubular member is extruded and disposed onto a resin hose to coat the hose, whereby the tubular member and the resin hose may be brought into intimate contact with each other. In order to bond the protection member to the resin hose, an adhesive is applied to the inner surface or the recess surface of the protection member in accordance with need, and the resin hose is inserted and fitted thereinto to bring them into intimate contact with each other. In this manner, a structural body having the resin hose and the protection member integrated with each other can be formed.

In the fuel pipe quick connector of the present invention, by combining with hermeticity improving techniques such as O-rings and welding, the amount of fuel permeation through the wall can be reduced, and the characteristics such as creep deformation resistance can be improved. Therefore, when the fuel pipe quick connector is combined with a resin hose having excellent fuel permeation-preventing properties, a fuel line system can be constituted in which the evapotranspiration of fuel is more highly suppressed

[Examples]

Hereinafter, the present invention is more specifically described by way of Examples, however, it should be appreciated that the present invention is not limited thereto. In the Examples provided, the methods described hereinbelow were used to determine intrinsic viscosity, the amount of terminal amino groups, the amount of terminal carboxyl groups, the terminal blocking ratio, residence stability evaluation, preparation of test pieces, hot-water resistance, alcohol resistance (chemical resistance), the average dispersed-particle size in an alloy with a maleic anhydride-modified ethylene-propylene copolymer, impact resistance, adhesive property evaluation, the tensile elongation of a chemical transport hose, the low-temperature impact resistance of the chemical transport hose, the LLC resistance (chemical resistance) of the chemical transport hose, the mechanical properties when formed as a pipe joint, the fuel permeability of the pipe joint and the low-temperature impact resistance of the pipe joint. The results obtained are shown in Tables 1 to 3.

Intrinsic viscosity [η]

The inherent viscosity ($\eta_{inh}$) of each of the samples having concentrations of 0.05 g/dl, 0.1 g/dl, 0.2 g/dl and 0.4 g/dl in concentrated sulfuric acid was determined at 30°C using the following equation (6). The value obtained by extrapolating the measured values to zero concentration was used as the intrinsic viscosity [η]. In the equation (6), $t_0$ represents the flow-down time (sec) of the solvent, $t_1$ represents the flow-down time (sec) of the sample solution and C represents the concentration (g/dl) of the sample in the solution. When the sample solution contained solid material, the solid material was removed by filtration using a filter having a pore size of 0.5 μm, and the obtained filtrate was used for measurement.

$$\eta_{inh} = [\ln (t_1 / t_0)] / C \quad (6)$$

Amount of terminal amino groups

1 g of a semi-aromatic polyamide resin was dissolved in 35 ml of phenol, and 2 ml of methanol was added thereto, whereby a sample solution was obtained. Titration using 0.01N aqueous hydrochloric acid with thymol blue as an indicator was performed to determine the amount of terminal amino groups (μeq/g).

Amount of terminal carboxyl groups

1 g of a semi-aromatic polyamide resin was dissolved in 35 ml of o-cresol under heating. After cooling, 20 ml of benzyl alcohol and 250 μl of formaldehyde were added to the resulting solution. Potentiometric titration using a methanol solution of KOH (concentration: 0.1N) was performed to determine the amount of terminal carboxyl groups (μeq/g).

Terminal blocking ratio

The number of each of the carboxyl group terminals, the amino group terminals and the blocked terminals was determined by $^1$H-NMR analysis (500 MHz, and measured in deuterated trifluoroacetic acid at 50°C) on the basis of the integrated values of the characteristic signals corresponding to the respective terminal groups, and the terminal blocking ratio was determined from the foregoing equation (2).

Residence stability evaluation

A semi-aromatic polyamide resin or a polyamide resin composition comprising this polyamide resin was injected using an 80-ton injection molding apparatus (product of Nissei Plastic Industrial Co., Ltd.) after being retained therein at a cylinder temperature of 330°C for 5 minutes. The intrinsic viscosities before and after injection were determined, and the stability of the intrinsic viscosity was evaluated. The smaller the absolute value of the difference between "the intrinsic viscosity before injection" and "the intrinsic viscosity after injection," the more preferable the resin or the resin composition being used. When the absolute value of the difference was less than 0.03 dl/g, a rating of "Good (G)" was given. When the absolute value of the difference was 0.03 dl/g or more and 0.10 dl/g or less, a rating of "Moderate (M)" was given. Further to this, when the absolute value of the difference was 0.10 dl/g or more, a rating of "No Good (NG)" was given.

Preparation of test pieces

Test pieces (64 mm x 12.7 mm x 3.2 mm) for impact resistance and average dispersed-particle size evaluation and JIS No. 1 dumbbell-type test pieces for hot-water resistance and alcohol resistance evaluations were prepared using an 80-ton injection molding apparatus (product of Nissei Plastic Industrial Co., Ltd.). Specifically, each of the test pieces was prepared using a semi-aromatic polyamide resin or a polyamide resin composition comprising this polyamide resin under the condition with a cylinder temperature of 320°C and a mold temperature of 150°C.

Hot-water resistance

The JIS No. 1 dumbbell-type test piece prepared by the above detailed method was treated with steam in a pressure resistant autoclave at 120°C in 2 atmospheric pressures for 120 hours. Subsequently, the test piece was vacuum dried at 120°C for 120 hours. The tensile yield strengths of the test piece before and after the steam treatment were measured according to the method of JIS K7113. The ratio (%) of "the tensile yield strength of the test piece after the steam treatment" to "the tensile yield strength of the test piece before the steam treatment" was determined and used as the hot-water resistance (%).

Alcohol resistance (chemical resistance)

The JIS No. 1 dumbbell-type test piece prepared by the above method was immersed in methyl alcohol at 23°C for 7 days. The tensile yield strengths of the test piece before and after the immersion treatment were measured according to the method of JIS K7113. The ratio (%) of "the tensile yield strength of the test piece after the immersion treatment" to "the tensile yield strength of the test piece before the immersion treatment" was determined and used as the alcohol resistance (%).

Average dispersed-particle size in an alloy with maleic anhydride-modified ethylene-propylene copolymer

The freeze-fracture surface of the test piece for average dispersed-particle size evaluation prepared by the above detailed method was etched with chloroform at a temperature of 80°C for 1 hour and was observed under a scanning electron microscope. The dispersed-particle size d and the number of particles n were determined from the obtained picture, and the average dispersed-particle size of the dispersed phase was computed using the following equation (7).

$$\text{Average dispersed-particle size} = (\Sigma\, d^4 \cdot n\,)\; /\; (\Sigma\, d^3 \cdot n)$$

$$(7)$$

Impact resistance

The test piece for impact resistance evaluation prepared by the above detailed method was used to measure a notched Izod impact value according to the JIS K7110 method by means of an Izod impact test apparatus (Product of Toyo Seiki Seisaku-Sho, Ltd).

Adhesive property evaluation (adhesive properties to maleic anhydride-modified polyethylene)

A test piece for adhesive property evaluation was prepared using maleic anhydride-modified polyethylene (DK4100, product of Japan Polyolefin Corporation) by means of an 80-ton injection molding apparatus (product of Nissei Plastic Industrial Co., Ltd.). The obtained dumbbell was cut in half, and a portion from the cut surface was machined into a wedge-like shape to a depth of 25 mm, whereby an insert test piece of maleic anhydride-modified polyethylene was obtained. After the test piece was inserted into a metal mold, a semi-aromatic polyamide resin was filled into the metal mold using injection molding conditions with a cylinder temperature of 330°C and a mold temperature of 150°C, whereby the test piece for adhesive property evaluation was obtained. The obtained test piece for adhesive property evaluation was stretched, and the maximum load at fracture was measured by using Autograph. Further to this, the fracture behavior was observed. When peeling did not occur at the interface between the semi-aromatic polyamide resin and the maleic anhydride-modified polyethylene but the material itself was fractured, a rating of "Good (G)" was given. When peeling occurred at the interface between the semi-aromatic polyamide resin and the maleic anhydride-modified polyethylene, a rating of "No Good (NG)" was given.

Tensile elongation of chemical transport hose

Evaluation was performed according to a method described in SAE J-2260 7.15.

Low-temperature impact resistance of chemical transport hose

Evaluation was performed according to a method described in DIN 73378 6.4.6.

LLC resistance (chemical resistance) of chemical transport hose

One end of a hose cut to 200 mm was hermetically plugged. An engine coolant (LLC, ethylene glycol : water = 50:50 by mass) was charged inside the hose, and the other end was then also hermetically plugged. Subsequently, the test hose was placed in an oven at 130°C and was treated for 2000 hours. After heat treatment, the hose was measured for tensile elongation and low-temperature impact resistance according to the methods mentioned above. The retention of the tensile elongation was calculated using the following equation (8).

$$\text{Retention (\%)} = \{(\text{the tensile elongation of the hose after the treatment}) / (\text{the tensile elongation of the hose before the treatment})\} \times 100 \quad (8)$$

Mechanical properties as a pipe joint

Test pieces according to the ASTM standard were prepared using an 80-ton injection molding apparatus (product of Nissei Plastic Industrial Co., Ltd.). Specifically, the test pieces were prepared with a cylinder temperature of 320°C and a mold temperature of 150°C using polyamide resin compositions obtained in Examples 7 to 10, Comparative Examples 12 to 16 and Reference Examples 1 and 2 to be described later. The obtained injection-molded test pieces were evaluated for the following physical properties according to the respective measurement methods.

Tensile strength: ASTM D638
Bending strength, bending elastic modulus: ASTM D790
Notched Izod impact strength: ASTM D256 (measurement temperatures: 25°C and -40°C)
Electric resistance (specific surface resistance): ASTM D257

Fuel permeability of pipe joint

Joints having an outer diameter of 8 mm, a wall thickness of 2 mm and a length of 100 mm were prepared by using the polyamide resin compositions obtained in Examples 7 to 10, Comparative Examples 12 to 16 and Reference Examples 1 and 2 to be described later. One end of each of the joints was hermetically plugged, and ethanol-gasoline obtained by mixing Fuel C (isooctane : toluene = 50 : 50 by volume) and ethanol at a volume ratio of 90 / 10 was charged inside the each of the joints. Then, the other end was also hermetically plugged. Subsequently, the entire weight was measured, and then the joint was placed in an oven at 60°C. The change in weight was measured, whereby the fuel permeability was evaluated

Low-temperature impact resistance of pipe joint

Joints having an outer diameter of 8 mm, a wall thickness of 2 mm and a length of 200 mm were prepared using the polyamide resin compositions obtained in Examples 7 to 10, Comparative Examples 12 to 16 and Reference Examples 1 and 2 to be described later. Then, a falling ball impact test (weight of falling ball: 0.91 kg, height: 30 cm) was performed at -40°C. The test was repeated 10 times, and the low-temperature impact resistance as a pipe joint was evaluated by counting the number of fractured joints.

Example 1

(1) Manufacturing of semi-aromatic polyamide resin (PA9T-1)

An autoclave having an inner volume of 20 liters was charged with 4539.3 g (27.3 moles) of terephthalic acid, 4478.8 g (28.3 moles) of a mixture of 1,9-nonanediamine and 2-methyl-1,8-octanediamine [the former : the latter = 80 : 20 by mole], 101.6 g (0.83 moles) of benzoic acid, 9.12 g of sodium hypophosphite monohydrate (0.1% by mass based on the total weight of raw materials) and 2.5 liters of distilled water, and the atmosphere of the autoclave was replaced with nitrogen. The mixture was stirred at 100°C for 30 minutes, and the temperature inside the autoclave was increased to 220°C over 2 hours. At this time, the pressure inside the autoclave was also increased to 2 MPa. In this state, the reaction was continued for 2 hours, and then the temperature was increased to 230°C. Subsequently, the temperature was maintained at 230°C for 2 hours, and the reaction was continued while the pressure was maintained at 2 MPa by gradually discharging water vapor. Subsequently, the pressure was reduced to 1 MPa over 30 minutes, and the reaction was further continued for 1 hour, thereby obtaining a prepolymer having an intrinsic viscosity [$\eta$] of 0.18 dl/g.
The obtained prepolymer was dried at 100°C under reduced pressure for 12 hours and was pulverized to a particle size of 2 mm or less. The pulverized prepolymer was subjected to solid phase polymerization at 230°C and 13 Pa (0.1 mmHg) for 10 hours, thereby obtaining a white polyamide resin having a melting point of 300°C, an intrinsic viscosity [$\eta$] of 1.21 dl/g, terminal amino groups in an amount of 75 $\mu$eq/g, terminal carboxyl groups in an amount of 9 $\mu$eq/g and a terminal blocking ratio of 88%. This polyamide resin is abbreviated as "PA9T-1."
Various physical properties of the obtained polyamide resin were evaluated. The obtained results are shown in Table 1.

(2) Manufacturing of polyamide resin composition

100 parts by mass of PA9T-1 dried at 120°C under reduced pressure for 14 hours and 10 parts by mass of maleic anhydride-modified ethylene-propylene copolymer (T7761P, product of JSR Corporation) were extruded in a molten state by means of a twin-screw extruder "LABO PLASTMILL 2D25W" (product of Toyo Seiki Seisaku-Sho, Ltd) at a cylinder temperature of 330°C and a rotating speed of 40 rpm to form pellets, whereby pellets of a polyamide resin composition were obtained. The obtained pellets were dried in a vacuum dryer at 120°C for 12 hours, and various physical properties thereof were evaluated. The obtained results are shown in Table 1.

Example 2

(1) Manufacturing of semi-aromatic polyamide resin (PA9T-2)

An autoclave having an inner volume of 20 liters was charged with 4537.7 g (27.3 moles) of terephthalic acid, 4496.5 g (28.4 moles) of a mixture of 1,9-nonanediamine and 2-methyl-1,8-octanediamine [the former : the latter = 80 : 20 by mole], 84.4 g (0.69 moles) of benzoic acid, 9.12 g of sodium-hypophosphite monohydrate (0.1% by mass based on the total weight of raw materials) and 2.5 liters of distilled water, and the atmosphere of the autoclave was replaced with nitrogen. The mixture was stirred at 100°C for 30 minutes, and the temperature inside the autoclave was increased to 220°C over 2 hours. At this time, the pressure inside the autoclave was increased to 2 MPa. In this state, the reaction was continued for 2 hours, and then the temperature was increased to 230°C. Subsequently, the temperature was maintained at 230°C for 2 hours, and the reaction was continued while the pressure was maintained at 2 MPa by gradually discharging water vapor. Subsequently, the pressure was reduced to 1 MPa over 30 minutes, and the reaction was further continued for 1 hour, thereby obtaining a prepolymer having an intrinsic viscosity [η] of 0.15 dl/g.

The obtained prepolymer was dried at 100°C under reduced pressure for 12 hours and was pulverized to a particle size of 2 mm or less. The pulverized prepolymer was subjected to solid phase polymerization at 230°C and 13 Pa (0.1 mmHg) for 10 hours, thereby obtaining a white polyamide resin having a melting point of 300°C, an intrinsic viscosity [η] of 1.17 dl/g, terminal amino groups in an amount of 90 μeq/g, terminal carboxyl groups in an amount of 4 μeq/g and a terminal blocking ratio of 83%. This polyamide resin is abbreviated as "PA9T-2."

Various physical properties of the obtained polyamide resin were evaluated. The obtained results are shown in Table 1.

(2) Manufacturing of polyamide resin composition

The same procedure as in (2) of Example 1 was repeated except that 100 parts by mass of PA9T-2 was used in place of 100 parts by mass of PA9T-1 in (2) of Example 1, thereby obtaining pellets of a polyamide resin composition. The obtained pellets were dried in a vacuum dryer at 120°C for 12 hours, and various physical properties thereof were evaluated. The obtained results are shown in Table 1.

Example 3

(1) Manufacturing of semi-aromatic polyamide resin (PA9T-3)

An autoclave having an inner volume of 20 liters was charged with 4525.9 g (27.2 moles) of terephthalic acid, 4496.5 g (28.5 moles) of a mixture of 1,9-nonanediamine and 2-methyl-1,8-octanediamine [the former: the latter = 80 : 20 by mole], 77.4 g (0.63 moles) of benzole acid, 9.12 g of sodium hypophosphite monohydrate (0.1% by mass based on the total weight of raw materials) and 2.5 liters of distilled water, and the atmosphere of the autoclave was replaced with nitrogen. The mixture was stirred at 100°C for 30 minutes, and the temperature inside the autoclave was increased to 220°C over 2 hours. At this time, the pressure inside the autoclave was increased to 2 MPa. In this state, the reaction was continued for 2 hours, and then the temperature was increased to 230°C. Subsequently, the temperature was maintained at 230°C for 2 hours, and the reaction was continued while the pressure was maintained at 2 MPa by gradually discharging water vapor. Subsequently, the pressure was reduced to 1 MPa over 30 minutes, and the reaction was further continued for 1 hour, thereby obtaining a prepolymer having an intrinsic viscosity [η] of 0.16 dl/g.

The obtained prepolymer was dried at 100°C under reduced pressure for 12 hours and was pulverized to a particle size of 2 mm or less. The pulverized prepolymer was subjected to solid phase polymerization at 230°C and 13 Pa (0.1 mmHg) for 10 hours, thereby obtaining a white polyamide resin having a melting point of 300°C, an intrinsic viscosity [η] of 1.15 dl/g, terminal amino groups in an amount of 105 μeq/g, terminal carboxyl groups in an amount of 2 μeq/g and a terminal blocking ratio of 78%. This polyamide resin is abbreviated as "PA9T-3."

Various physical properties of the obtained polyamide resin were evaluated. The obtained results are shown in Table 1.

(2) Manufacturing of polyamide resin composition

The same procedure as in (2) of Example 1 was repeated except that 100 parts by mass of PA9T-3 was used in place of 100 parts by mass of PA9T-1 in (2) of Example 1, thereby obtaining pellets of a polyamide resin composition. The obtained pellets were dried in a vacuum dryer at 120°C for 12 hours, and various physical properties thereof were evaluated. The obtained results are shown in Table 1.

Comparative Example 1

(1) Manufacturing of semi-aromatic polyamide resin (PA9T-4)

An autoclave having an inner volume of 20 liters was charged with 4601.0 g (27.7 moles) of terephthalic acid, 4432.1 g (28.0 moles) of a mixture of 1,9-nonanediamine and 2-methyl-1,8-octanediamine [the former : the latter = 80 : 20 by mole], 116.0 g (0.95 moles) of benzoic acid, 9.12 g of sodium hypophosphite monohydrate (0.1% by mass based on the total weight of raw materials) and 2.5 liters of distilled water, and the atmosphere of the autoclave was replaced with nitrogen. The mixture was stirred at 100°C for 30 minutes, and the temperature inside the autoclave was increased to 220°C over 2 hours. At this time, the pressure inside the autoclave was increased to 2 MPa. In this state, the reaction was continued for 2 hours, and then the temperature was increased to 230°C. Subsequently, the temperature was maintained at 230°C for 2 hours, and the reaction was continued while the pressure was maintained at 2 MPa by gradually discharging water vapor. Subsequently, the pressure was reduced to 1 MPa over 30 minutes, and the reaction was further continued for 1 hour, thereby obtaining a prepolymer having an intrinsic viscosity [$\eta$] of 0.17 dl/g.

The obtained prepolymer was dried at 100°C under reduced pressure for 12 hours and was pulverized to a particle size of 2 mm or less. The pulverized prepolymer was subjected to solid phase polymerization at 230°C and 13 Pa (0.1 mmHg) for 10 hours, thereby obtaining a white polyamide resin having a melting point of 300°C, an intrinsic viscosity [$\eta$] of 1.22 dl/g, terminal amino groups in an amount of 8 $\mu$eq/g, terminal carboxyl groups in an amount of 65 $\mu$eq/g and a terminal blocking ratio of 85%. This polyamide resin is abbreviated as "PA9T-4."

Various physical properties of the obtained polyamide resin were evaluated. The obtained results are shown in Table 1.

(2) Manufacturing of polyamide resin composition

The same procedure as in (2) of Example 1 was repeated except that 100 parts by mass of PA9T-4 was used in place of 100 parts by mass of PA9T-1 in (2) of Example 1, thereby obtaining pellets of a polyamide resin composition. The obtained pellets were dried in an vacuum dryer at 120°C for 12 hours, and various physical properties thereof were evaluated. The obtained results are shown in Table 1.

Comparative Example 2

(1) Manufacturing of semi-aromatic polyamide resin (PA9T-5)

An autoclave having an inner volume of 20 liters was charged with 4547.4 g (27.4 moles) of terephthalic acid, 4453.8 g (28.1 moles) of a mixture of 1,9-nonanediamine and 2-methyl-1,8-octanediamine [the former: the latter = 80 : 20 by mole], 119.1 g (0.97 moles) of benzoic acid, 9.12 g of sodium hypophosphite monohydrate (0.1% by mass based on the total weight of raw materials) and 2.5 liters of distilled water, and the atmosphere of the autoclave was replaced with nitrogen. The mixture was stirred at 100°C for 30 minutes, and the temperature inside the autoclave was increased to 220°C over 2 hours. At this time, the pressure inside the autoclave was increased to 2 MPa. In this state, the reaction was continued for 2 hours, and then the temperature was increased to 230°C. Subsequently, the temperature was maintained at 230°C for 2 hours, and the reaction was continued while the pressure was maintained at 2 MPa by gradually discharging water vapor. Subsequently, the pressure was reduced to 1 MPa over 30 minutes, and the reaction was further continued for 1 hour, thereby obtaining a prepolymer having an intrinsic viscosity [$\eta$] of 0.16 dl/g.

The obtained prepolymer was dried at 100°C under reduced pressure for 12 hours and was pulverized to a particle size of 2 mm or less. The pulverized prepolymer was subjected to solid phase polymerization at 230°C and 13 Pa (0.1 mmHg) for 10 hours, thereby obtaining a white polyamide resin having a melting point of 301°C, an intrinsic viscosity [$\eta$] of 1.25 dl/g, terminal amino groups in an amount of 44 $\mu$eq/g, terminal carboxyl groups in an amount of 23 $\mu$eq/g and a terminal blocking ratio of 83%. This polyamide resin is abbreviated as "PA9T-5."

Various physical properties of the obtained polyamide resin were evaluated. The obtained results are shown in Table 1.

(2) Manufacturing of polyamide resin composition

The same procedure as in (2) of Example 1 was repeated except that 100 parts by mass of PA9T-5 was used in place of 100 parts by mass of PA9T-1 in (2) of Example 1, thereby obtaining pellets of a polyamide resin composition. The obtained pellets were dried in a vacuum dryer at 120°C for 12 hours, and various physical properties thereof were evaluated. The obtained results are shown in- Table 1.

Comparative Example 3

(1) Manufacturing of semi-aromatic polyamide resin (PA9T-6)

An autoclave having an inner volume of 20 liters was charged with 4545.6 g (27.3 moles) of terephthalic acid, 4407.0 g (27.8 moles) of a mixture of 1,9-nonanediamine and 2-methyl-1,8-octanediamine [the former : the latter = 80 : 20 by mole], 16.7 g (0.14 moles) of benzoic acid, 9.12 g of sodium hypophosphite monohydrate (0.1% by mass based on the total weight of raw materials) and 2.5 liters of distilled water, and the atmosphere of the autoclave was replaced with nitrogen. The mixture was stirred at 100°C for 30 minutes, and the temperature inside the autoclave was increased to 220°C over 2 hours. At this time, the pressure inside the autoclave was increased to 2 MPa. In this state, the reaction was continued for 2 hours, and then the temperature was increased to 230°C. Subsequently, the temperature was maintained at 230°C for 2 hours, and the reaction was continued while the pressure was maintained at 2 MPa by gradually discharging water vapor. Subsequently, the pressure was reduced to 1 MPa over 30 minutes, and the reaction was further continued for 1 hour, thereby obtaining a prepolymer having an intrinsic viscosity [η] of 0.16 dl/g.

The obtained prepolymer was dried at 100°C under reduced pressure for 12 hours and was pulverized to a particle size of 2 mm or less. The pulverized prepolymer was subjected to solid phase polymerization at 230°C and 13 Pa (0.1 mmHg) for 6 hours, thereby obtaining a white polyamide resin having a melting temperature of 300°C, an intrinsic viscosity [η] of 1.11 dl/g, terminal amino groups in an amount of 80 μeq/g, terminal carboxyl groups in an amount of 46 μeq/g and a terminal blocking ratio of 15%. This polyamide resin is abbreviated as "PA9T-6."

Various physical properties of the obtained polyamide resin were evaluated. The obtained results are shown in Table 1.

(2) Manufacturing of polyamide resin composition

The same procedure as in (2) of Example 1 was repeated except that 100 parts by mass of PA9T-6 was used in place of 100 parts by mass of PA9T-1 in (2) of Example 1, thereby obtaining pellets of a polyamide resin composition. The obtained pellets were dried in a vacuum dryer at 120°C for 12 hours, and various physical properties thereof were evaluated. The obtained results are shown in Table 1.

Comparative Example 4

(1) Manufacturing of semi-aromatic polyamide resin (PA9T-7)

An autoclave having an inner volume of 20 liters was charged with 4585.4 g (27.6 moles) of terephthalic acid, 4500.7 g (27.6 moles) of a mixture of 1,9-nonanediamine and 2-methyl-1,8-octanediamine [the former: the latter = 80: 20 by mole], 33.9 g (0.28 moles) of benzoic acid, 9.12 g of sodium hypophosphite monohydrate (0.1% by mass based on the total weight of raw materials) and 2.5 liters of distilled water, and the atmosphere of the autoclave was replaced with nitrogen. The mixture was stirred at 100°C for 30 minutes, and the temperature inside the autoclave was increased to 220°C over 2 hours. At this time, the pressure inside the autoclave was increased to 2 MPa. In this state, the reaction was continued for 2 hours, and then the temperature was increased to 230°C. Subsequently, the temperature was maintained at 230°C for 2 hours, and the reaction was continued while the pressure was maintained at 2 MPa by gradually discharging water vapor. Subsequently, the pressure was reduced to 1 MPa over 30 minutes, and the reaction was further continued for 1 hour, thereby obtaining a prepolymer having an intrinsic viscosity [η] of 0.16 dl/g.

The obtained prepolymer was dried at 100°C under reduced pressure for 12 hours and was pulverized to a particle size of 2 mm or less. The pulverized prepolymer was subjected to solid phase polymerization at 230°C and 13 Pa (0.1 mmHg) for 6 hours, thereby obtaining a white polyamide resin having a melting point of 299°C, an intrinsic viscosity [η] of 1.12 dl/g, terminal amino groups in an amount of 100 μeq/g, terminal carboxyl groups in an amount of 25 μeq/g and a terminal blocking ratio of 48%. This polyamide resin is abbreviated as "PA9T-7."

Various physical properties of the obtained polyamide resin were evaluated. The obtained results are shown in Table 1.

(2) Manufacturing of polyamide resin composition

The same procedure as in (2) of Example 1 was repeated except that 100 parts by mass of PA9T-7 was used in place of 100 parts by mass of PA9T-1 in (2) of Example 1, thereby obtaining pellets of a polyamide resin composition. The obtained pellets were dried in a vacuum dryer at 120°C for 12 hours, and various physical properties thereof were evaluated. The obtained results are shown in Table 1.

Comparative Example 5

(1) Manufacturing of semi-aromatic polyamide resin (PA6M-6T)

An autoclave having an inner volume of 20 liters was charged with 3438.3 g (20.7 moles) of terephthalic acid, 1007.4 g (6.9 moles) of adipic acid, 2561.1 g (22.0 moles) of 1,6-hexanediamine, 765.0 g (6.6 moles) of 2-methyl-1,5-pentanediamine, 50.4 g (0.84 moles) of acetic acid, 7.77 g of sodium hypophosphite monohydrate and 2.5 liters of distilled water, and the atmosphere of the autoclave was replaced with nitrogen. The mixture was stirred at 100°C for 30 minutes, and the temperature inside the autoclave was increased to 220°C over 2 hours. At this time, the pressure inside the autoclave was increased to 2 MPa. In this state, the reaction was continued for 2 hours, and then the temperature was increased to 230°C. Subsequently, the temperature was maintained at 230°C for 2 hours, and the reaction was continued while the pressure was maintained at 2 MPa by gradually discharging water vapor. Subsequently, the pressure was reduced to 1 MPa over 30 minutes, and the reaction was further continued for 1 hour, thereby obtaining a prepolymer having an intrinsic viscosity [η] of 0.19 dl/g.

The obtained prepolymer was dried at 100°C under reduced pressure for 12 hours and was pulverized to a particle size of 2 mm or less. The pulverized prepolymer was subjected to solid phase polymerization at 230°C and 13 Pa (0.1 mmHg) for 10 hours, thereby obtaining a white polyamide resin having an intrinsic viscosity [η] of 1.04 dl/g, terminal amino groups in an amount of 91 μeq/g, terminal carboxyl groups in an amount of 14 μeq/g and a terminal blocking ratio of 67%. This polyamide resin is abbreviated as "PA6M-6T."

The obtained polyamide resin was evaluated for various physical properties of by means of the above respective methods. The obtained results are shown in Table 1.

(2) Manufacturing of polyamide resin composition

The same procedure as in (2) of Example 1 was repeated except that 100 parts by mass of PA6M-6T was used in place of 100 parts by mass of PA9T-1 in (2) of Example 1, thereby obtaining pellets of a polyamide resin composition. The obtained pellets were-dried in a vacuum dryer at 120°C for 12 hours, and various physical properties thereof were evaluated. The obtained results are shown in Table 1.

[Table 1]

| | Example | | | Comparative Example | | | | |
|---|---|---|---|---|---|---|---|---|
| | 1 | 2 | 3 | 1 | 2 | 3 | 4 | 5 |
| | PA9T-1 | PA9T-2 | PA9T-3 | PA9T-4 | PA9T-5 | PA9T-6 | PA9T-7 | PA9T-6T |
| Evaluation of polyamide resin | | | | | | | | |
| Intrinsic viscosity [η] (dl/g) | 1.21 | 1.17 | 1.15 | 1.22 | 1.25 | 1.11 | 1.12 | 1.04 |
| Amount of terminal amino groupe (μeq/g) | 75 | 90 | 105 | 8 | 44 | 80 | 100 | 91 |
| Amount of terminal carboxyl groupe (μeq/g) | 9 | 4 | 2 | 65 | 23 | 46 | 25 | 14 |
| $[NH_2]$ / [COOH] | 8.3 | 23 | 53 | 0.12 | 1.9 | 1.7 | 4 | 6.5 |
| Termineal blocking ratio (%) | 88 | 83 | 78 | 85 | 83 | 15 | 48 | 67 |
| Residence stability evaluation | G | G | G | G | G | NG | G | G |
| Hot-water resistance (%) | 98 | 96 | 93 | 97 | 94 | 88 | 84 | 90 |
| Alcohol resistance (%) | 75 | 78 | 73 | 77 | 74 | 61 | 55 | 40 |
| Adhesive property evaluation: Maximum load (N) | 335 | 368 | 390 | 222 | 250 | 370 | 385 | 330 |
| Adhesive property evaluation: Fracture behavior | G | G | G | NG | NG | G | G | G |
| Evaluation of polyamide resin composition (alloy with maleic anhydride-modified ethylen-propylene copolymer) | | | | | | | | |
| Residence stability evaluation | G | G | G | G | G | M | M | M |

(continued)

| | Example | | | Comparative Example | | | | |
|---|---|---|---|---|---|---|---|---|
| | 1 | 2 | 3 | 1 | 2 | 3 | 4 | 5 |
| | PA9T-1 | PA9T-2 | PA9T-3 | PA9T-4 | PA9T-5 | PA9T-6 | PA9T-7 | PA9T-6T |
| Average dispersed-particle size ($\mu$m) | 1.1 | 1.1 | 1 | 1.5 | 1.4 | 1.2 | 1.1 | 1.6 |
| Hot-water resistance (%) | 97 | 96 | 94 | 97 | 95 | 90 | 85 | 88 |
| Alcohol resistance (%) | 85 | 83 | 82 | 78 | 76 | 64 | 59 | 46 |
| Notched Izod impact strength (J/m$^2$) | 710 | 714 | 724 | 590 | 625 | 698 | 821 | 635 |

Manufacturing Example 1 Manufacturing of polyamide resin composition (A-1)

100 parts by mass of PA9T-1 dried at 120°C under reduced pressure for 14 hours and 25 parts by mass of maleic anhydride-modified ethylene-propylene copolymer (T7761P, product of JSR Corporation) were extruded in a molten state by means of a twin screw extruder (screw diameter: 30 mm, L/D = 28, cylinder temperature: 330°C, rotating speed: 150 rpm), whereby a pelletized polyamide resin composition (A-1) was obtained.

Manufacturing Example 2 Manufacturing of polyamide resin composition (A-2)

The same procedure as in Manufacturing Example 1 was repeated except that PA9T-1 was replaced with PA9T-2, thereby obtaining a polyamide resin composition (A-2).

Manufacturing Example 3 Manufacturing of polyamide resin composition (A-3)

The same procedure as in Manufacturing Example 1 was repeated except that PA9T-1 was replaced with PA9T-4, thereby obtaining a polyamide resin composition (A-3).

Manufacturing Example 4 Manufacturing of polyamide resin composition (A-4)

The same procedure as in Manufacturing Example 1 was repeated except that PA9T-1 was replaced with PA9T-5, thereby obtaining a polyamide resin composition (A-4).

Manufacturing Example 5 Manufacturing of polyamide resin composition (A-5)

The same procedure as in Manufacturing Example 1 was repeated except that PA9T-1 was replaced with PA9T-6, thereby obtaining a polyamide resin composition (A-5).

Manufacturing Example 6 Manufacturing of polyamide resin composition (A-6)

The same procedure as in Manufacturing Example 1 was repeated except that PA9T-1 was replaced with PA9T-7, thereby obtaining a polyamide resin composition (A-6).

Manufacturing Example 7 Manufacturing of polyamide resin composition (A-7)

The same procedure as in Manufacturing Example 1 was repeated except that PA9T-1 was replaced with PA6MT-6T, thereby obtaining a polyamide resin composition (A-7).

Manufacturing Example 8 Manufacturing of polyamide 6 resin composition (B)

To polyamide 6 (Amilan CM1017, product of. Toray Industries, Inc.) were previously added 25 parts by mass of maleic anhydride-modified ethylene-propylene copolymer (T7761P, product of JSR Corporation) serving as an impact-improving material and hexamethylene terephthalamide-hexamethylene isophthalamide copolymer (polyamide 6T-6I) (Grivory G21, product of EMS SHOWA DENKO K.K.) serving as an LLC resistance-improving material. The molten resin was extruded into a strand-like form by means of a twin screw extruder (screw diameter: 30 mm, L/D = 28, cylinder temperature:. 290°C, rotating speed: 150 rpm). Then, the extruded resin was introduced in a water bath, cooled, cut and vacuum-dried, thereby obtaining pellets of a polyamide 6 resin composition (B) composed of 65% by mass of the polyamide 6 resin, 25% by mass of the impact-improving material and 10% by mass of the LLC resistance-improving material.

Example 4

The abovementioned polyamide resin composition (A-1) was used. The polyamide resin composition (A-1) was melted at an extruding temperature of 320°C in a Plabor single-layer hose molding apparatus (product of PLABOR co., Ltd.), and the discharged molten resin was molded into a hose-like shape. Subsequently, the hose was cooled by means of a sizing die for controlling the dimensions and was taken up, thereby obtaining a single-layer hose composed of the polyamide resin composition (A-1) and having a thickness of 1 mm, an inner diameter of 6 mm and an outer diameter of 8 mm. The physical property measurement results of the single-layer hose are shown in Table 2.

Example 5

The same method as in Example 4 was repeated except that the polyamide resin composition (A-1) in Example 4 was replaced with the polyamide resin composition (A-2), thereby obtaining a single-layer hose. The physical property measurement results of the single-layer hose are shown in Table 2.

Example 6

The abovementioned polyamide 6 resin composition (B) and polyamide resin composition (A-1) were used. The polyamide resin composition (A-1) and the polyamide 6 resin composition (B) were separately melted in a Plabor double-layer hose molding apparatus (product of PLABOR co., Ltd.) at an extrusion temperature of 260°C for the polyamide resin composition (A-1) and 260°C for the polyamide 6 resin composition (B). Then, the discharged molten resins were merged using an adaptor and are molded into a laminated tubular article. Subsequently, the laminated tubular article was cooled by means of a sizing die for controlling the dimensions and were taken up, thereby obtaining a laminated hose having an inner diameter of 6 mm, an outer diameter of 8 mm and a layer structure in which (a) / (b) = 0.5 / 0.5 mm, wherein the (a) layer is an outer layer composed of the polyamide 6 resin composition (B) and the (b) layer is an inner layer composed of the polyamide resin composition (A-1). The physical property measurement results of the laminated hose are shown in Table 2

Comparative Example 6

The same method as in Example 4 was repeated except that the polyamide resin composition (A-1) in Example 4 was replaced with the polyamide resin composition (A-3), thereby obtaining a single-layer hose. The physical property measurement results of the single-layer hose are shown in Table 2.

Comparative Example 7

The same method as in Example 4 was repeated except that the polyamide resin composition (A-1) in Example 4 was replaced with the polyamide resin composition (A-4), thereby obtaining a single-layer hose. The physical property measurement results of the single-layer hose are shown in Table 2.

Comparative Example 8

The same method as in Example 4 was repeated except that the polyamide resin composition (A-1) in Example 4 was replaced with the polyamide resin composition (A-5), thereby obtaining a single-layer hose. The physical property measurement results of the single-layer hose are shown in Table 2.

Comparative Example 9

The same method as in Example 4 was repeated except that the polyamide resin composition (A-1) in Example 4 was replaced with the polyamide resin composition (A-6), thereby obtaining a single-layer hose. The physical property measurement results of the single-layer hose are shown in Table 2.

Comparative Example 10

The same method as in Example 4 was repeated except that the polyamide resin composition (A-1) in Example 4 was replaced with the polyamide resin composition (A-7), thereby obtaining a single-layer hose. The physical property measurement results of the single-layer hose are shown in Table 2.

Comparative Example 11

The same method as in Example 4 was repeated except that the polyamide resin composition (A-1) in Example 4 was replaced with the polyamide 6 resin composition (B) and the polyamide 6 resin composition (B) was melted at an extrusion temperature of 260°C, thereby obtaining a single-layer hose. The physical property measurement results of the single-layer hose are shown in Table 2.

[Table 2]

| | Outer layer | | Inner layer | | Tensile elongation (%) | | | Low-temperature impact resistance (fractured number / test number) | |
|---|---|---|---|---|---|---|---|---|---|
| | Polyamide resin composition | Thickness (mm) | Polyamide resin composition | Thickness (mm) | Initial state | After LLC treatment | Retention (%) | Initial state | After LLC treatment |
| Example 4 | - | - | A-1 | 1 | 140 | 107 | 76 | 0/10 | 0/10 |
| Example 5 | - | - | A-2 | 1 | 143 | 106 | 74 | 0/10 | 0/10 |
| Example 6 | B | 0.5 | A-1 | 0.5 | 196 | 166 | 85 | 0/10 | 0/10 |
| Comparative Example 6 | - | - | A-3 | 1 | 78 | 25 | 32 | 2/10 | 7/10 |
| Comparative Example 7 | - | - | A-4 | 1 | 73 | 28 | 38 | 1/10 | 8/10 |
| Comparative Example 8 | - | - | A-5 | 1 | 63 | 23 | 37 | 1/10 | 7/10 |
| Comparative Example 9 | - | - | A-6 | 1 | 68 | 21 | 31 | 2/10 | 9/10 |
| Comparative Example 10 | - | - | A-7 | 1 | 55 | 9 | 16 | 6/10 | 10/10 |
| Comparative Example | - | - | B | 0.5 | 199 | 33 | 18 | 0/10 | 6/10 |

Manufacturing Example 9 Manufacturing of semi-aromatic polyamide resin (PA9T-8)

The same procedure as in (1) of Example 1 was repeated except that the amount used of terephthalic acid, the mixture of 1,9-nonanediamine and 2-methyl-1,8-octanediamine and benzoic acid were different, thereby a prepolymer having an intrinsic viscosity $[\eta]$ of 0.17 dl/g. Specifically, 4568.6 g (27.5 moles) of terephthalic acid, 4447.9 g (28.1 moles) of the mixture of 1,9-nonanediamine and 2-methyl-1,8-octanediamine [the former : the latter = 80 : 20 by mole] and 108.7 g (0.89 moles) of benzoic acid were used. Furthermore, solid phase polymerization was performed as in (1) of Example 1, thereby obtaining a white polyamide having a melting point of 300°C, an intrinsic viscosity $[\eta]$ of 1.22 dl/g, terminal amino groups in an amount of 34 $\mu$eq/g, terminal carboxyl groups in an amount of 30 $\mu$eq/g ($[NH_2]$ / $[COOH]$ = 1.1) and a terminal blocking ratio of 87%. This polyamide resin is abbreviated as "PA9T-8."

Example 7

PA9T-1 (100 parts by mass), glass fibers (product of Nitto Boseki Co., Ltd., CS-3J-256S; 30 parts by mass) and maleic anhydride-modified ethylene-propylene copolymer (product of JSR Corporation, T7761P; 10 parts by mass) serving as the resin modified with the $\alpha,\beta$-unsaturated carboxylic acid and/or the derivative thereof were melt-extruded by means of a twin screw extruder. Then, the physical properties of the obtained polyamide resin composition were evaluated. The results are shown in Table 3.

Example 8

PA9T-1 (100 parts by mass), glass fibers (product of Nitto Boseki Co., Ltd., CS-3J-256S; 30 parts by mass), maleic anhydride-modified ethylene-propylene copolymer (product of JSR Corporation, T7761P; 10 parts by mass) serving as the resin modified with the $\alpha,\beta$-unsaturated carboxylic acid and/or the derivative thereof and Ketjen black (product of Lion Corporation, EC600JD; 12 parts by mass) serving as a conductive filler were melt-extruded by means of a twin screw extruder. Then, the physical properties of the obtained polyamide resin composition were evaluated. The results are shown in Table 3.

Example 9

PA9T-1 (100 parts by mass), glass fibers (product of Nitto Boseki Co., Ltd., CS-3J-256S; 15 parts by mass), maleic anhydride-modified ethylene-propylene copolymer (product of JSR Corporation, T7761P; 10 parts by mass) serving as the resin modified with the $\alpha,\beta$-unsaturated carboxylic acid and/or the derivative thereof and carbon fibers (product of Mitsubishi Chemical Corporation, K223SE; 15 parts by mass) serving as a conductive filler were melt-extruded by means of a twin screw extruder. Then, the physical properties of the obtained polyamide resin composition were evaluated. The results are shown in Table 3.

Example 10

The same procedure as in Example 7 was repeated except that PA9T-3 was used in place of PA9T-1, thereby preparing a polyamide resin composition. Various physical properties of the resin composition were evaluated. The results are shown in Table 3.

Comparative Example 12

The same procedure as in Example 7 was repeated except that PA9T-8 was used in place of PA9T-1, thereby preparing a polyamide resin composition. Various physical properties of the resin composition were evaluated. The results are shown in Table 3.

Comparative Example 13

The same procedure as in Example 7 was repeated except that PA9T-4 was used in place of PA9T-1, thereby preparing a polyamide resin composition. Various physical properties of the resin composition were evaluated. The results are shown in Table 3.

Reference Example 1

PA9T-1 (100 parts by mass), glass fibers (product of Nitto Boseki Co., Ltd., CS-3J-256S; 30 parts by mass) and Ketjen black (product of Lion Corporation, EC600JD; 12 parts by mass) serving as a conductive filler were melt-extruded by means of a twin screw extruder. Then, the physical properties of the obtained polyamide resin composition were evaluated. The results are shown in Table 3.

Comparative Example 14

The same procedure as in reference Example 1 was repeated except that PA9T-8 was used in place of PA9T-1, thereby preparing a polyamide resin composition. Various physical properties of the resin composition were evaluated. The results are shown in Table 3.

Reference Example 2

PA9T-1 (100 parts by mass), glass fibers (product of Nitto Boseki Co., Ltd., CS-3J-256S; 15 parts by mass) and carbon fibers (product of Mitsubishi Chemical Corporation, K223SE; 15 parts by mass) serving as a conductive filler were melt-extruded by means of a twin screw extruder. Then, the physical properties of the obtained polyamide resin composition were evaluated. The results are shown in Table 3.

Comparative Example 15

PA12 (product of EMS SHOWA DENKO K.K., L20G; 100 parts by mass), glass fibers (product of Nitto Boseki Co., Ltd., CS-3J-256S; 30 parts by mass), maleic anhydride-modified ethylene-propylene copolymer (product of JSR Corporation, T7761P; 10 parts by mass) serving as the resin modified with the $\alpha,\beta$-unsaturated carboxylic acid and/or the derivative thereof and Ketjen black (product of Lion Corporation, EC600JD; 12 parts by mass) serving as a conductive filler were melt-extruded by means of a twin screw extruder. Then, the physical properties of the obtained polyamide resin composition were evaluated. The results are shown in Table 3.

Comparative Example 16

PA12 (product of EMS SHOWA DENKO K.K., L20G; 100 parts by mass), glass fibers (product of Nitto Boseki Co., Ltd., CS-3J-256S; 15 parts by mass), maleic anhydride-modified ethylene-propylene copolymer (product of JSR Corporation, T7761P; 10 parts by mass) serving as the resin modified with the $\alpha,\beta$-unsaturated carboxylic acid and/or the derivative thereof and carbon fibers (product of Mitsubishi Chemical Corporation, K223SE; 15 parts by mass) serving as a conductive filler were melt-extruded by means of a twin screw extruder. Then, the physical properties of the obtained polyamide resin composition were evaluated. The results are shown in Table 3.

[Table 3]

| | Example | | | | Comparative Example | | Reference Example | Comparative Example | Reference Example | Comparative Example | |
|---|---|---|---|---|---|---|---|---|---|---|---|
| | 7 | 8 | 9 | 10 | 12 | 13 | 1 | 14 | 2 | 15 | 16 |
| Polyamide (parts by mass) | | | | | | | | | | | |
| PA9T-1 | 100 | 100 | 100 | | | | 100 | | 100 | | |
| PA9T-3 | | | | 100 | | | | | | | |
| PA9T-8 | | | | | 100 | | | 100 | | | |
| PA9T-4 | | | | | | 100 | | | | | |
| PA12 | | | | | | | | | | 100 | 100 |
| Glass fiber (parts by mass) | 30 | 30 | 15 | 30 | 30 | 30 | 30 | 30 | 15 | 30 | 15 |
| Maleic anhydride-modified ethylene-propylene copolymer (parts by mass) | 10 | 10 | 10 | 10 | 10 | 10 | | | | 10 | 10 |
| Conductive filler (parts by mass) | | | | | | | | | | | |
| Ketjen black | | 12 | | | | | 12 | 12 | | 12 | |
| Carbon fiber | | | 15 | | | | | | 15 | | 15 |
| Tensile strength (MPa | 97 | 99 | 109 | 98 | 100 | 102 | 110 | 111 | 123 | 85 | 107 |
| Bending strength (MPa) | 128 | 130 | 152 | 130 | 132 | 136 | 147 | 152 | 170 | 120 | 137 |
| Bending elastic modulus (GPa) | 3.9 | 4.1 | 5.4 | 3.8 | 4.1 | 4.2 | 5.2 | 5.3 | 8.3 | 3.8 | 6.3 |
| Notched Izod impact strength (J/m) 23°C | 199 | 139 | 142 | 221 | 90 | 88 | 76 | 78 | 82 | 220 | 173 |
| -40°C | 147 | 101 | 103 | 152 | 68 | 61 | 55 | 52 | 59 | 155 | 142 |
| Specific surface resistance ($\Omega$/sq) | $10^{16}$ | $10^6$ | $10^6$ | $10^{16}$ | $10^{16}$ | $10^{16}$ | $10^5$ | $10^5$ | $10^6$ | $10^6$ | $10^6$ |
| Fuel permeability (mg/day) | 3.4 | 3.3 | 3.2 | 3.7 | 3.1 | 3.1 | 1.9 | 1.5 | 1.9 | 79.1 | 78.3 |
| Low-temperature impact resistance (fractured number / test number) | 0/10 | 0/10 | 0/10 | 0/10 | 7/10 | 6/10 | 10/10 | 10/10 | 9/10 | 0/10 | 0/10 |

EP 1 860 134 B1

As can be seen from the results of Table 1, in the semi-aromatic polyamide resins and the polyamide resin compositions of each of Examples 1 to 3 of the present invention, good results were obtained in all the evaluation categories.

Meanwhile, in Comparative Example 1, the ratio of the terminal amino groups to the terminal carboxyl groups was much less than 6 since the amount of the terminal amino groups was excessively small. Therefore, the results show that the maximum load (adhesive property evaluation) of the polyamide resin was poorer than that of each of the Examples and that the fracture behavior (adhesive property evaluation) was not good. In the polyamide resin composition of Comparative Example 1, the average dispersed-particle size was large, and the alcohol resistance and impact resistance deteriorated.

In Comparative Example 2, the amount of the terminal amino groups was larger than that of Comparative Example 1 but was still excessively small, and thus the ratio of the terminal amino groups to the terminal carboxyl groups was less than 6. Therefore, the results show that the maximum load (adhesive property evaluation) of the polyamide resin was poorer than that of each of the Examples and that the fracture behavior (adhesive property evaluation) was not good. In the polyamide resin composition of Comparative Example 2, the average dispersed-particle size was large, and the alcohol resistance and impact resistance were reduced.

In Comparative Example 3, the ratio of the terminal amino groups to the terminal carboxyl groups was less than 6 since the amount of the terminal carboxyl groups was larger relative to that of each of the Examples. Therefore, the residence stability of the polyamide resin was not satisfactory, and the hot-water resistance and the alcohol resistance were poorer than those of the Examples. In the polyamide resin composition of Comparative Example 3, the residence stability was not satisfactory, and the average dispersed-particle size was slightly large. In addition to this, the hot-water resistance and the alcohol resistance were reduced.

In Comparative Example 4, the ratio of the terminal amino groups to the terminal carboxyl groups was less than 6 since the amount of the terminal carboxyl groups was larger relative to that of each of the Examples. Therefore, the residence stability of the polyamide resin was not satisfactory, and also the hot-water resistance and the alcohol resistance were problematic. In the polyamide resin composition of Comparative Example 4, the residence stability was not satisfactory, and the hot-water resistance and the alcohol resistance were reduced.

In Comparative Example 5, diamine units other than the diamine units having 9 to 13 carbon atoms were used. In this case, the residence stability of the polyamide resin was not satisfactory, and also the alcohol resistance was problematic. In the polyamide resin composition of Comparative Example 5, the residence stability was not satisfactory, and the average dispersed-particle size was large. In addition to this, the hot-water resistance and the alcohol resistance were reduced.

As can be seen from the results of Table 2, the chemical transport hose of each of Examples 4 to 6 was excellent in tensile elongation not only at the initial state but also after the LLC treatment. In addition to this, a retention of the tensile elongation was more than 70% and thus each of the chemical transport hoses was also excellent in durability. Meanwhile, in the chemical transport hose of each of Comparative Examples 6 and 7, the amount of the terminal amino groups in the semi-aromatic polyamide resin used was too small, and the ratio of the amount of the amino groups to the amount of the carboxyl groups was also too small. In the chemical transport hose of each of Comparative Examples 8 and 9, the ratio of the amount of the amino groups to the amount of the carboxyl groups was also too small. In the chemical transport hose of Comparative Example 10, diamine having 6 carbon atoms was used as the diamine constituting the semi-aromatic polyamide resin. Moreover, in the chemical transport hose of Comparative Example 11, the polyamide 6 resin composition was used. Therefore, the results of all the evaluation categories including the tensile elongation after the LLC treatment, the retention of the tensile elongation before and after the LLC treatment and the low-temperature impact resistance were poorer than those of the chemical transport hose of each of the Examples.

Furthermore, as can be seen from the results of Table 3, in the pipe joint (or test piece) in which the polyamide resin composition of each of Examples 7 to 10 was used, the results of all the evaluation categories including "tensile strength," "bending strength," "bending elastic modulus," "notched Izod impact strength," at 23°C and -40°C, "specific surface resistance," "fuel permeability" and "low-temperature impact resistance" were preferable, i.e., were practically satisfactory levels.

Meanwhile, in the pipe joint (or test piece) in which the polyamide resin composition of each of Comparative Examples 12 and 13 in which a conductive filler was not used was used, the amount of the terminal amino groups in the semi-aromatic polyamide resin used was too small, and the ratio of the amount of the terminal amino groups to the amount of the terminal carboxyl groups was also too small. Hence, the notched Izod impact strengths at 23°C and -40°C were lower than those of each of Examples 7 and 10 in which a conductive filler was not used, and the results of the low-temperature impact resistance were poorer. Moreover, in each of Reference Examples 1 and 2 and Comparative Example 14 in which a conductive filler was used, the polyamide resin composition used did not contain a polyolefin-based resin modified with an $\alpha,\beta$-unsaturated carboxylic acid and/or a derivative thereof. Therefore, not only the notched Izod impact strengths at 23°C and -40°C were lower than those of each of Examples 8 and 9 in which a conductive filler was used, but also the results of low-temperature impact resistance were poorer. In each of Comparative Examples 15 and 16, PA12 different from a semi-aromatic polyamide was used as the polyamide. Therefore, the results of fuel permeability were very poor.

In the semi-aromatic polyamide resin of the present invention, a predetermined ratio or higher of the terminal groups of the molecular chains thereof are blocked, and the amount of remaining terminal amino groups is set within a specific range. In addition to this, the value obtained by dividing the amount of the terminal amino groups by the amount of the terminal carboxyl groups is equal to or larger than a predetermined value. Therefore, the semi-aromatic polyamide resin exhibits high residence stability, hot-water resistance and chemical resistance and exhibits very good adhesive properties to, and compatibility with, other resin materials which form polymer alloys. Therefore, a polyamide resin composition comprising this semi-aromatic polyamide resin exhibits high residence stability and hot-water resistance and can be used to provide a molded article which is excellent in heat resistance, low water absorbency, dimensional stability and mechanical strength such as creep resistance while exhibiting high impact resistance. Furthermore, this molded article is more excellent in chemical resistance. Hence, the polyamide resin composition comprising the semi-aromatic polyamide resin of the present invention is suitable as a molding material for, for example, industrial resources, industrial materials, household products

Moreover, the chemical transport hose of the present invention exhibits excellent chemical resistance and good elongation and also has excellent heat resistance, impact resistance, low water absorbency, dimensional stability, creep resistance. Therefore, the chemical transport hose of the present invention can be preferably used as a chemical transport hose in various fields including the field of automobile parts, the field of industrial resources, the field of industrial materials, the field of household products.

Furthermore, the pipe joint of the present invention can significantly prevent permeation of fuel through a wall and is excellent in impact resistance. In addition to this, a pipe system having high sealing properties can be constituted by welding and joining the pipe joint to a resin hose. In particular, the pipe joint can be preferably used as a fuel pipe quick connector used in automobiles.

## Claims

1.    A semi-aromatic polyamide resin comprising:

dicarboxylic acid units in which 50 to 100 mol% of the dicarboxylic acid units are aromatic dicarboxylic acid units; and diamine units in which 60 to 100 mol% of the diamine units are aliphatic diamine units having 9 to 13 carbon atoms, wherein at least 10% of terminal groups of molecular chains of the semi-aromatic polyamide resin are blocked with a terminal-blocking agent, wherein an amount of terminal amino groups of the molecular chains is 60 $\mu$eq/g or more and 120 $\mu$eq/g or less, and wherein the following inequality (1) is satisfied:

$$[NH_2] \, / \, [COOH] \geq 6 \qquad (1)$$

where $[NH_2]$ ($\mu$eq/g) represents the amount of the terminal amino groups determined by titration of a sample solution of 1 g of a semi-aromatic polyamide resin dissolved in 35 ml of phenol, to which 2 ml of methanol was added, using 0.01 N aqueous hydrochloric acid with thymol blue as an indicator, and [COOH] ($\mu$eq/g) represents an amount of terminal carboxyl groups determined by potentiometric titration of 1 g of a semi-aromatic polyamide resin dissolved in 35 ml of o-cresol under heating, to which solution 20 ml of benzyl alcohol and 250 $\mu$l of formaldehyde were added after cooling, using a 0.1 N methanolic solution of KOH,
wherein the ratio of terminal groups of molecular chains of the semi-aromatic polyamide resin that are blocked with a terminal-blocking agent is determined according to the following formula (2):

$$[(A - B) \, / \, A] \times 100\% \qquad (2),$$

wherein A represents the total number of terminal groups of the molecular chains, and B represents the total number of the terminal carboxyl groups and the terminal amino groups,
wherein the number of each of the terminal carboxyl groups, the terminal amino groups and the blocked terminal groups for determining the terminal blocking ratio according to the above formula (2) are determined by $^1$H-NMR analysis at 500 MHz in deuterated trifluoroacetic acid at 50°C on the basis of the integrated values of the characteristic signals corresponding to the respective terminal groups.

2. The semi-aromatic polyamide resin according to claim 1, wherein the aliphatic diamine units having 9 to 13 carbon atoms are 1,9-nonanediamine units and/or 2-methyl-1,8-octanediamine units.

3. A polyamide resin composition comprising the semi-aromatic polyamide resin according to claim 1 or 2 and an additional resin other than the semi-aromatic polyamide resin.

4. The polyamide resin composition according to claim 3, wherein the additional resin is a resin modified with an $\alpha,\beta$-unsaturated carboxylic acid and/or a derivative thereof.

5. The polyamide resin composition according to claim 4, wherein the resin modified with the $\alpha,\beta$-unsaturated carboxylic acid and/or the derivative thereof is obtained by modifying, with the $\alpha,\beta$-unsaturated carboxylic acid and/or the derivative thereof, at least one resin selected from the group consisting of a polyolefin-based resin, a polyester-based resin, a polythioether-based resin, a fluorine-based resin and a polyamide-based resin.

6. A molded article comprising the polyamide resin composition according to any one of claims 3 to 5.

7. A chemical transport hose comprising at least one layer composed of a polyamide resin composition comprising 10 to 99 parts by mass of the semi-aromatic polyamide resin according to claim 1 or 2 and 90 to 1 part by mass of a polyolefin-based resin modified with an $\alpha,\beta$-unsaturated carboxylic acid and/or a derivative thereof.

8. The chemical transport hose according to claim 7, with a purpose of transporting an engine coolant (LLC), a diesel fuel, an oil-drilling liquid, an alcohol-containing gasoline or an urea solution therethrough.

9. A pipe joint comprising a polyamide resin composition comprising 100 parts by mass of the semi-aromatic polyamide resin according to claim 1 or 2, 10 to 200 parts by mass of a resin-reinforcing fiber and 5 to 50 parts by mass of a polyolefin-based resin modified with an $\alpha,\beta$-unsaturated carboxylic acid and/or a derivative thereof.

10. The pipe joint according to claim 9, wherein the resin-reinforcing fiber is glass fiber.

11. The pipe joint according to claim 9 or 10, wherein the polyamide resin composition further comprises 3 to 30 parts by mass of a conductive filler with respect to 100 parts by mass of the semi-aromatic polyamide resin.

12. The pipe joint according to any one of claims 9 to 11, being a fuel pipe quick connector.

13. A fuel pipe part comprising a resin hose and a pipe joint according to claim 12 which is joined to the resin hose by means of at least one welding method selected from the group consisting of a spin welding method, a vibration welding method, a laser welding method and an ultrasonic welding method.


**Patentansprüche**

1. Halbaromatisches Polyamidharz, umfassend:

   Dicarbonsäureeinheiten, in welchen 50 bis 100 Mol-% der Dicarbonsäureeinheiten aromatische Dicarbonsäureeinheiten sind; und Diamineinheiten, in welchen 60 bis 100 Mol-% der Diamineinheiten aliphatische Diamineinheiten mit 9 bis 13 Kohlenstoffatomen sind, wobei mindestens 10% der Endgruppen der Molekülketten des halbaromatischen Polyamidharzes mit einem terminalen Blockierungsmittel blockiert sind, wobei ein Gehalt an terminalen Aminogruppen der Molekülketten 60 $\mu$eq/g oder mehr und 120 $\mu$eq/g oder weniger beträgt, und wobei die folgende Ungleichung (1) erfüllt ist:

$$[NH_2] / [COOH] \geq 6 \qquad (1)$$

   worin [NH$_2$] ($\mu$eq/g) den Gehalt der terminalen Aminogruppen darstellt, bestimmt durch Titration einer Probenlösung von 1 g von einem halbaromatischen Polyamidharz, das in 35 ml Phenol gelöst ist, zu welcher 2 ml Methanol hinzugefügt wurden, unter Verwendung 0,01 N wässriger Salzsäure mit Thymolblau als Indikator, und [COOH] ($\mu$eq/g) einen Gehalt terminaler Carboxylgruppen darstellt, bestimmt durch potentiometrische Titration von 1 g von einem halbaromatischen Polyamidharz, das in 35 ml O-Kresol unter Erwärmung gelöst ist, zu welcher Lösung nach Abkühlen 20 ml Benzylalkohol und 250 $\mu$l Formaldehyd hinzugefügt wurden, unter Verwendung einer 0,1 N methanolischen Lösung von KOH,
wobei das Verhältnis an Endgruppen der Molekülketten des halbaromatischen Polyamidharzes, die mit einem terminalen Blockierungsmittel blockiert sind, gemäß folgender Formel (2) bestimmt wird:

$$[(A - B) / A] \times 100\% \qquad (2)$$

wobei A die Gesamtzahl an Endgruppen der Molekülketten darstellt und B die Gesamtzahl von den terminalen Carboxylgruppen und den terminalen Aminogruppen darstellt,
wobei die Anzahl von jeder der terminalen Carboxylgruppen, der terminalen Aminogruppen und der blockierten Endgruppen zur Bestimmung des terminalen Blockierungsverhältnisses gemäß der vorstehenden Formel (2) durch $^1$H-NMR-Spektroskopie bei 500 MHz in deuterierter Trifluoressigsäure bei 50°C auf Grundlage von den integrierten Werten der charakteristischen Signale, die den jeweiligen Endgruppen entsprechen, bestimmt werden.

2. Halbaromatisches Polyamidharz nach Anspruch 1, wobei die aliphatischen Diamineinheiten mit 9 bis 13 Kohlenstoffatomen 1,9-Nonandiamineinheiten und/oder 2-Methyl-1,8-octandiamineinheiten sind.

3. Polyamidharzzusammensetzung, umfassend das halbaromatische Polyamidharz nach Anspruch 1 oder 2 und ein zusätzliches, von dem halbaromatischen Polyamidharz verschiedenes Harz.

4. Polyamidharzzusammensetzung nach Anspruch 3, wobei das zusätzliche Harz ein mit einer $\alpha,\beta$-ungesättigten Carbonsäure und/oder einem Derivat hiervon modifiziertes Harz ist.

5. Polyamidharzzusammensetzung nach Anspruch 4, wobei das mit der $\alpha,\beta$-ungesättigten Carbonsäure und/oder dem Derivat hiervon modifizierte Harz durch das Modifizieren mit der $\alpha,\beta$-ungesättigten Carbonsäure und/oder dem Derivat hiervon mindestens eines Harzes, ausgewählt aus der Gruppe, bestehend aus einem Polyolefin-basierten Harz, einem Polyester-basierten Harz, einem Polythioether-basierten Harz, einem Fluor-basierten Harz und einem Polyamid-basierten Harz, erhalten ist.

6. Formkörper, umfassend die Polyamidharzzusammensetzung nach einem der Ansprüche 3 bis 5.

7. Chemischer Beförderungsschlauch, umfassend mindestens eine Schicht, die aus einer Polyamidharzzusammensetzung, umfassend 10 bis 99 Massenteile des halbaromatischen Polyamidharzes nach Anspruch 1 oder 2 und 90 bis 1 Massenteile eines Polyolefin-basierten Harzes, modifiziert mit einer $\alpha,\beta$-ungesättigten Carbonsäure und/oder einem Derivat hiervon, zusammengesetzt ist.

8. Chemischer Beförderungsschlauch nach Anspruch 7 mit Zweck der Beförderung eines Maschinenkühlmittels (LLC), eines Dieselkraftstoffes, einer Ölbohrungsflüssigkeit, eines alkoholhaltigen Benzins oder einer Harnstofflösung hierdurch.

9. Rohrverbindung, umfassend eine Polyamidharzzusammensetzung, umfassend 100 Massenteile des halbaromatischen Polyamidharzes nach Anspruch 1 oder 2, 10 bis 200 Massenteile einer harzverstärkten Faser und 5 bis 50 Massenteile eines Polyolefin-basierten Harzes, modifiziert mit einer $\alpha,\beta$-ungesättigten Carbonsäure und/oder einem Derivat hiervon.

10. Rohrverbindung nach Anspruch 9, wobei die harzverstärkte Faser Glasfaser ist.

11. Rohrverbindung nach Anspruch 9 oder 10, wobei die Polyamidhar-zzusammensetzung ferner 3 bis 30 Massenteile eines leitenden Füllstoffes in Bezug auf 100 Massenteile des halbaromatischen Polyamidharzes umfasst.

12. Rohrverbindung nach einem der Ansprüche 9 bis 11, die ein Schnellverbindungsstück einer Kraftstoffleitung ist.

13. Kraftstoffleitungsteil, umfassend einen Harzschlauch und eine Rohrverbindung nach Anspruch 12, welche mit dem Harzschlauch durch mindestens ein Schweißverfahren verbunden ist, ausgewählt aus der Gruppe, bestehend aus einem Rotationsschweißverfahren, einem Vibrationsschweißverfahren, einem Laserschweißverfahren und einem Ultraschallschweißverfahren.

**Revendications**

1. Résine polyamide semi-aromatique, comprenant :

des unités acide dicarboxylique dans lesquelles 50 à 100% en moles des unités acide dicarboxylique sont des unités acide dicarboxylique aromatique ; et des unités diamine dans lesquelles 60 à 100% en moles des unités diamine sont des unités diamine aliphatique ayant 9 à 13 atomes de carbone, où au moins 10% des groupes terminaux des chaine moléculaires de la résine polyamide semi-aromatique sont bloqués par un agent de blocage des terminaisons, où la quantité de groupes amino terminaux des chaines moléculaires se situe à 60 $\mu$éq/g ou plus et à 120 $\mu$éq/g ou moins, et où l'inégalité suivante (1) est satisfaite :

$$[NH_2]/[COOH] \geq 6 \ (1)$$

où $[NH_2]$ ($\mu$éq/g) représente la quantité de groupes amino terminaux déterminée par le titrage d'une solution échantillon de 1 g d'une résine polyamide semi-aromatique dissoute dans 35 ml de phénol, à laquelle on ajoute 2 ml de méthanol, en utilisant l'acide chlorhydrique aqueux 0,01 N et le bleu de thymol comme indicateur, et $[COOH]$ ($\mu$éq/g) représente la quantité de groupes carboxyle terminaux déterminée par le titrage potentiométrique de 1 g d'une résine polyamide semi-aromatique dissoute dans 35 ml de o-crésol en chauffant, à laquelle on ajoute 20 ml d'alcool benzylique et 250 $\mu$l de formaldéhyde après refroidissement, en utilisant une solution méthanolique de KOH 0,1 N,
où le rapport des groupes terminaux des chaines moléculaires de la résine polyamide semi-aromatique qui sont bloqués par un agent de blocage des terminaison est déterminé selon la formule (2) suivante :

$$[(A-B)/A] \times 100\% \qquad (2)$$

où A représente le nombre total de groupes terminaux des chaines moléculaires, et B représente le nombre total de groupes carboxyle terminaux et de groupes amino terminaux,
où le nombre de chacun des groupes carboxyle terminaux, des groupes amino terminaux et des groupes terminaux bloqués pour déterminer le rapport de blocage terminal selon la formule (2) ci-dessus sont déterminés par analyse RMN $^1$H à 500 MHz dans l'acide trifluoroacétique deutéré à 50°C sur base des valeurs intégrées des signaux caractéristiques correspondant aux groupes terminaux respectifs.

2. Résine polyamide semi-aromatique selon la revendication 1, où les unités diamine aliphatique ayant 9 à 13 atomes de carbone sont des unités 1,9-nonanediamine et/ou des unités 2-méthyl-1,8-octanediamine.

3. Composition de résine polyamide comprenant la résine polyamide semi-aromatique selon la revendication 1 ou 2, et une résine supplémentaire autre que la résine polyamide semi-aromatique.

4. Composition de résine polyamide selon la revendication 3, où la résine supplémentaire est une résine modifiée avec un acide carboxylique $\alpha,\beta$-insaturé et/ou un dérivé de celui-ci.

5. Composition de résine polyamide selon la revendication 4, où la résine modifiée avec l'acide carboxylique $\alpha,\beta$-insaturé et/ou son dérivé est obtenue par modification, avec l'acide carboxylique $\alpha,\beta$-insaturé et/ou son dérivé, au moins une résine choisie parmi le groupe consistant en une résine à base de polyoléfine, une résine à base de polyester, une résine à base de polythioéther, une résine à base de fluor et une résine à base de polyamide.

6. Article moulé comprenant la composition de résine polyamide selon l'une quelconque des revendications 3 à 5.

7. Tuyau de transport de composés chimiques comprenant au moins une couche composée d'une composition de résine polyamide comprenant 10 à 99 parties en masse de la résine polyamide semi-aromatique selon la revendication 1 ou 2 et 90 à 1 partie en masse d'une résine à base de polyoléfine modifiée avec un acide carboxylique $\alpha,\beta$-insaturé et/ou son dérivé.

8. Tuyau de transport de composés chimiques selon la revendication 7, destiné à transporter un réfrigérant de moteur (LLC), un combustible diesel, un liquide de forage, une essence contenant un alcool ou une solution d'urée.

9. Raccord de tube comprenant une composition de résine polyamide comprenant 100 parties en masse de la résine polyamide semi-aromatique selon la revendication 1 ou 2, 10 à 200 parties en masse d'une fibre de renforcement de la résine et 5 à 50 parties en masse d'une résine à base de polyoléfine modifiée avec un acide carboxylique $\alpha,\beta$-insaturé et/ou son dérivé.

10. Raccord de tube selon la revendication 9, où la fibre de renforcement de la résine est une fibre de verre.

11. Raccord de tube selon la revendication 9 ou 10, où la composition de résine polyamide comprend en outre 3 à 30 parties en masse d'une charge conductrice par rapport à 100 parties en masse de la résine polyamide semi-aromatique.

12. Raccord de tube selon l'une quelconque des revendications 9 à 11, qui est un connecteur rapide pour tube de combustible.

13. Elément de tube de combustible comprenant un tuyau en résine et un raccord de tube selon la revendication 12, qui est joint au tuyau en résine à l'aide d'au moins un procédé de soudage choisi parmi le groupe consistant en un procédé de soudage par rotation, un procédé de soudage par vibration, un procédé de soudage au laser et un procédé de soudage par ultrasons.

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI7228769 B
- JP HEI7228772 B
- JP HEI7228774 B
- JP HEI7228771 B
- JP HEI912874 B
- JP 2000186203 A
- JP 2002179910 A
- JP HEI11140237 B
- JP HEI7507739 W
- JP HEI11294676 B
- JP 2000310381 A
- JP 2001263570 A
- JP 2004150500 A
- JP SHO396810 B
- JP SHO5243677 B
- JP SHO535716 B
- JP SHO569925 B
- JP SHO58445 B